# EUROPEAN PATENT APPLICATION

(11) **EP 4 645 987 A1**
(43) Date of publication of application: **05.11.2025**
(21) Application number: 24750574.6
(22) Date of filing: 01.02.2024
(51) Int. Cl.: H04W 72/12, H04W 72/231, H04W 72/232, H04W 72/04, H04L 5/00

(54) **METHOD AND APPARATUS FOR TRANSMITTING AND RECEIVING DOWNLINK DATA CHANNEL IN NETWORK COOPERATIVE COMMUNICATION**

(30) Priority: 02.02.2023 KR 20230014153
(71) Applicant: Samsung Electronics Co., Ltd., Suwon-si, Gyeonggi-do 16677 (KR)
(72) Inventor: JANG, Youngrok, Suwon-si, Gyeonggi-do 16677 (KR); ABEBE, Ameha Tsegaye, Suwon-si, Gyeonggi-do 16677 (KR); LIM, Seongmok, Suwon-si, Gyeonggi-do 16677 (KR); JI, Hyoungju, Suwon-si, Gyeonggi-do 16677 (KR)
(74) Representative: Nederlandsch Octrooibureau
(86) International application number: PCT/KR2024/001508
(87) International publication number: WO 2024/162777

(57) **Abstract**

The present disclosure relates to a 5G or 6G communication system for supporting higher data transmission rates. The present disclosure relates to operations of a terminal and a base station in a wireless communication system and, more particularly, the present disclosure relates to a method for transmitting and receiving a downlink data channel in network cooperative communication and to an apparatus capable of performing same. The present disclosure provides an apparatus and a method that can effectively provide a service in a mobile communication system.

## Description

### [Technical Field]

The disclosure relates to operations of a terminal and a base station in a wireless communication system. Specifically, the disclosure relates to a method for transmitting and receiving a downlink data channel in network cooperative communication and to an apparatus capable of performing the same.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for largecapacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulationrelated requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multiantenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide an apparatus and a method capable of effectively providing services in a mobile communication system.

### [Solution to Problem]

A method by a terminal in a communication system according to an embodiment of the disclosure includes transmitting, to a base station, terminal capability information indicating whether two TCI states are supported for a coherent joint transmission (CJT) transmission scheme for a physical downlink shared channel (PDSCH), receiving, from the base station, configuration information for configuring the CJT transmission scheme as a first scheme or a second scheme according to the terminal capability information, receiving, from the base station, downlink control information (DCI) indicating a first TCI state and a second TCI state for reception of the PDSCH, and receiving the PDSCH from the base station, based on the CJT transmission scheme configured by the configuration information, wherein a demodulation reference signal (DMRS) associated with the PDSCH is quasi co-located (QCLed) with an RS of the first TCI state and an RS of the second TCI state according to the CJT transmission scheme configured by the configuration information.

A method by a base station in a communication system according to an embodiment of the disclosure includes receiving, from a terminal, terminal capability information indicating whether two TCI states are supported for a coherent joint transmission (CJT) transmission scheme for a physical downlink shared channel (PDSCH), transmitting, to the terminal, configuration information for configuring the CJT transmission scheme as a first scheme or a second scheme according to the terminal capability information, transmitting, to the terminal, downlink control information (DCI) indicating a first TCI state and a second TCI state for transmission of the PDSCH, and transmitting the PDSCH to the terminal, based on the CJT transmission scheme configured by the configuration information, wherein a demodulation reference signal (DMRS) associated with the PDSCH is quasi co-located (QCLed) with an RS of the first TCI state and an RS of the second TCI state according to the CJT transmission scheme configured by the configuration information.

A terminal in a communication system according to an embodiment of the disclosure includes a transceiver, and a controller configured to transmit, to a base station, terminal capability information indicating whether two TCI states are supported for a coherent joint transmission (CJT) transmission scheme for a physical downlink shared channel (PDSCH), receive, from the base station, configuration information for configuring the CJT transmission scheme as a first scheme or a second scheme according to the terminal capability information, receive, from the base station, downlink control information (DCI) indicating a first TCI state and a second TCI state for reception of the PDSCH, and receive the PDSCH from the base station, based on the CJT transmission scheme configured by the configuration information, wherein a demodulation reference signal (DMRS) associated with the PDSCH is quasi co-located (QCLed) with an RS of the first TCI state and an RS of the second TCI state according to the CJT transmission scheme configured by the configuration information.

A base station in a communication system according to an embodiment of the disclosure includes a transceiver, and a controller configured to receive, from a terminal, terminal capability information indicating whether two TCI states are supported for a coherent joint transmission (CJT) transmission scheme for a physical downlink shared channel (PDSCH), transmit, to the terminal, configuration information for configuring the CJT transmission scheme as a first scheme or a second scheme according to the terminal capability information, transmit, to the terminal, downlink control information (DCI) indicating a first TCI state and a second TCI state for transmission of the PDSCH, and transmit the PDSCH to the terminal, based on the CJT transmission scheme configured by the configuration information, wherein a demodulation reference signal (DMRS) associated with the PDSCH is quasi co-located (QCLed) with an RS of the first TCI state and an RS of the second TCI state according to the CJT transmission scheme configured by the configuration information.

### [Advantageous Effects of Invention]

Embodiments set forth herein provide an apparatus and a method capable of effectively providing services in a mobile communication system.

### [Brief Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.
FIG. 4 illustrates an example of base station beam allocation according to TCI state configurations in a wireless communication system according to an embodiment of the disclosure;
FIG. 5 illustrates a beam application time which may be considered in a case where a unified TCI scheme is used in a wireless communication system according to an embodiment of the disclosure.
FIG. 6 illustrates another MAC-CE structure for activation and indication of a joint TCI state or a separate DL or UL TCI state in a wireless communication system according to an embodiment of the disclosure.
FIG. 7 illustrates radio protocol structures of a base station and a UE in single cell, carrier aggregation, and dual connectivity situations in a wireless communication system according to an embodiment of the disclosure.
FIG. 8 illustrates a method in which a base station and a UE transmit/receive data in consideration of a downlink data channel and a rate matching resource in a wireless communication system according to an embodiment of the disclosure.
FIG. 9 illustrates an example of a control resource set configuration of a downlink control channel in a wireless communication system according to an embodiment of the disclosure.
FIG. 10 illustrates a structure of a downlink control channel in a wireless communication system according to an embodiment of the disclosure.
FIG. 11 illustrates an example of a method for allocating a TCI state to a PDCCH in a wireless communication system according to an embodiment of the disclosure.
FIG. 12 illustrates a TCI indication MAC CE signaling structure for a PDCCH DMRS in a wireless communication system according to an embodiment of the disclosure.
FIG. 13 illustrates an example of a beam configuration with regard to a control resource set and a search space in a wireless communication system according to an embodiment of the disclosure.
FIG. 14 illustrates an example of frequency domain resource allocation with regard to a physical downlink shared channel (PDSCH) in a wireless communication system according to an embodiment of the disclosure.
FIG. 15 illustrates an example of time domain resource allocation with regard to a PDSCH in a wireless communication system according to an embodiment of the disclosure.
FIG. 16 illustrates an example of an antenna port configuration and resource allocation for cooperative communication in a wireless communication system according to an embodiment of the disclosure.
FIG. 17 illustrates an example of a downlink control information (DCI) configuration for cooperative communication in a wireless communication system according to an embodiment of the disclosure.
FIG. 18 illustrates an example of a process for a beam configuration and activation with regard to a PDSCH.
FIG. 19 illustrates an enhanced PDSCH TCI state activation/deactivation MAC-CE structure.
FIG. 20 illustrates an operation of a UE for the C-JT PDSCH scheduling according to an embodiment of the disclosure.
FIG. 21 illustrates an operation of a base station for the C-JT PDSCH scheduling according to an embodiment of the disclosure.
FIG. 22 illustrates a structure of a UE in a wireless communication system according to an embodiment of the disclosure.
FIG. 23 illustrates a structure of a base station in a wireless communication system according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Therefore, the definitions of the terms should be made based on the contents throughout the specification.

the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

### [NR time-frequency resources]

Hereinafter, a frame structure of a 5G system will be described in more detail with reference to the accompanying drawings.

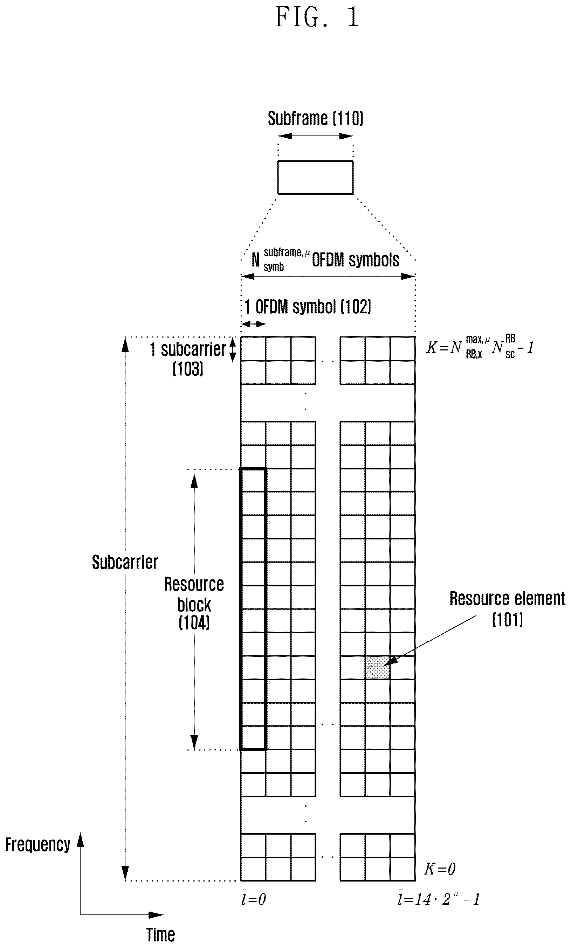

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, ${N}_{SC}^{RB}$ (for example, 12) consecutive REs may constitute one resource block (RB) 104. In the time domain, one subframe 110 may include multiple OFDM symbols 102. For example, the length of one subframe may be 1 ms.

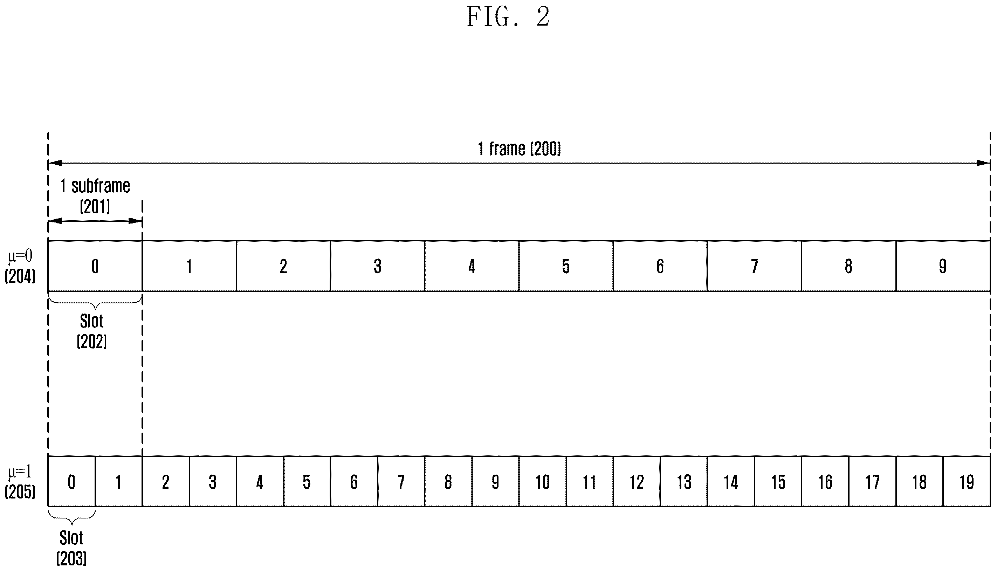

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $\left.{N}_{symb}^{slot}=14\right)$*.* One subframe 201 may include one or multiple slots 202 and 203, and the number of slots 202 and 203 per one subframe 201 may vary depending on configuration values µ for the subcarrier spacing 204 or 205. The example in FIG. 2 illustrates a case in which the subcarrier spacing configuration value is µ=0 (204), and a case in which µ=1 (205). In the case of µ=0 (204), one subframe 201 may include one slot 202, and in the case of µ=1 (205), one subframe 201 may include two slots 203. That is, the number of slots per one subframe ${N}_{slot}^{subframe , μ}$ may differ depending on the subcarrier spacing configuration value µ, and the number of slots per one frame ${N}_{slot}^{frame , μ}$ may differ accordingly. ${N}_{slot}^{subframe , μ}$ and ${N}_{slot}^{frame , μ}$ may be defined according to each subcarrier spacing configuration µ as in Table 1 below.

**[Table 1]**

| µ | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

### [Bandwidth part (BWP)]

Next, a bandwidth part (BWP) configuration in a 5G communication system will be described in detail with reference to the accompanying drawings.

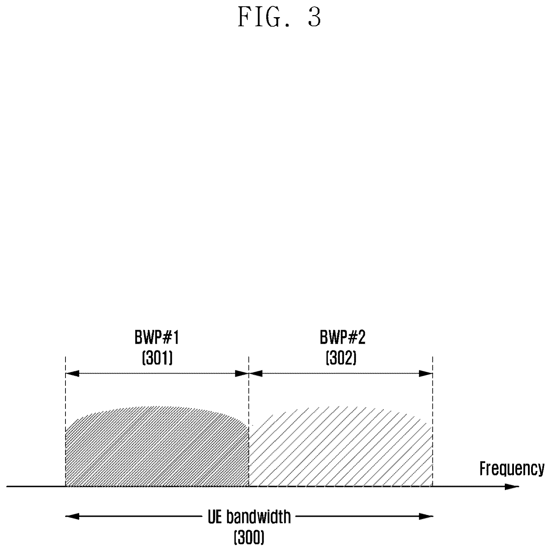

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

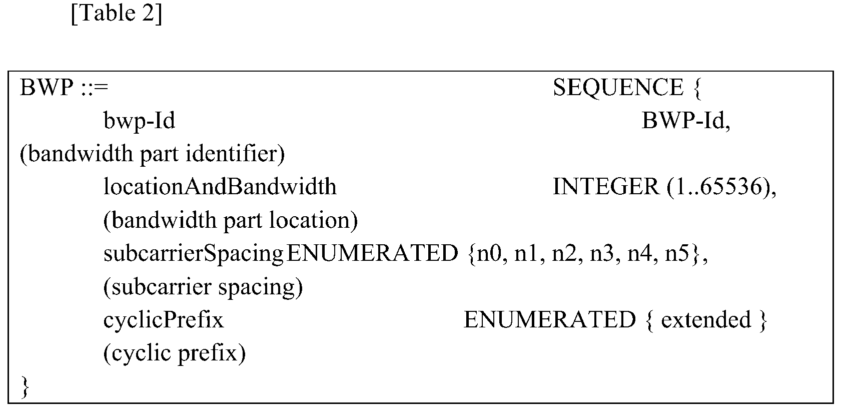

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (i.e., CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. In addition to receiving SIBs, the initial bandwidth part may also be used for other system information (OSI), paging, and random access.

### [Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time (T_{BWP}) required during a bandwidth part change are specified in standards, and may be defined as given below, for example.

**[Table 3]**

| **µ** | **NR Slot length (ms)** | **BWP switch delay T_{BWP} (slots)** | |
|---|---|---|---|
| | | **Type 1^{Note1}** | **Type 2^{Note 1}** |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+T_{BWP}, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time (T_{BWP}). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time (T_{BWP}).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

### [QCL, TCI state]

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 4 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 3 below.

**[Table 4]**

| **QCL type** | **Large-scale characteristics** |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 5 below. Referring to Table 5, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 4 above.

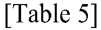

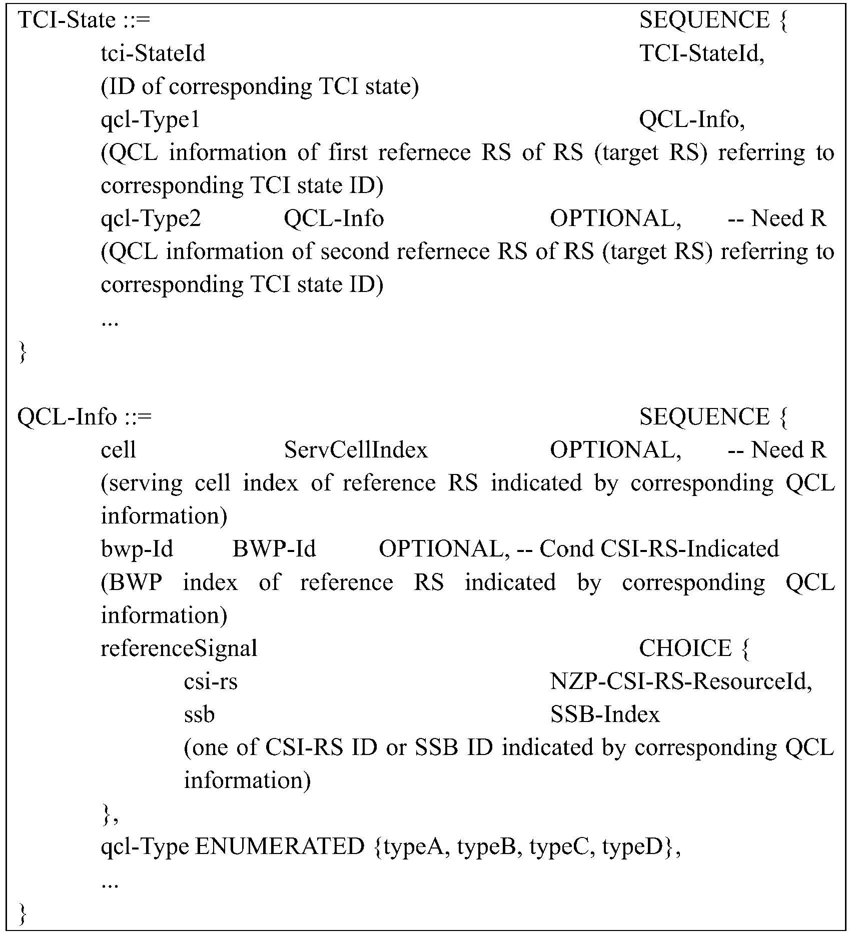

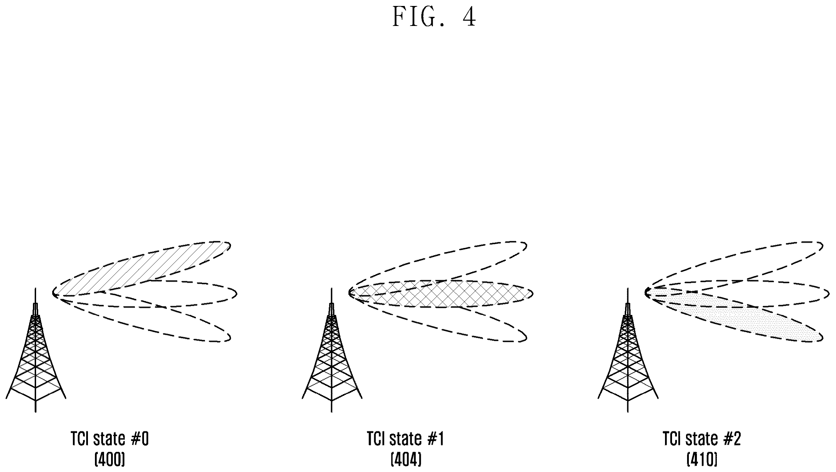

FIG. 4 illustrates an example of base station beam allocation according to TCI state configuration.

Referring to FIG. 4, the base station may transfer information regarding N different beams to the UE through N different TCI states. For example, in the case of N=3 as in FIG. 4, the base station may configure qcl-Type2 parameters included in three TCI states 400, 405, and 410 in QCL type D while being associated with CSI-RSs or SSBs corresponding to different beams, thereby notifying that antenna ports referring to the different TCI states 400, 405, and 410 are associated with different spatial Rx parameters, that is, different beams.

Tables 6 to 9 below enumerate valid TCI state configurations according to the target antenna port type.

Table 6 enumerates valid TCI state configurations when the target antenna port is a CSI-RS for tracking (TRS) The TRS refers to an NZP CSI-RS which has no repetition parameter configured therefor, and trs-Info of which is configured as "true", among CRI-RSs. In Table 6, configuration no. 3 may be used for an aperiodic TRS.

**[Table 6]**

| Valid TCI state configurations when the target antenna port is a CSI-RS for tracking (TRS) | | | | |
|---|---|---|---|---|
| **Valid TCI state Configuration** | **DL RS 1** | **qcl-Type1** | **DL RS 2 (If configured)** | **qcl-Type2 (If configured)** |
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 7 enumerates valid TCI state configurations when the target antenna port is a CSI-RS for CSI. The CSI-RS for CSI refers to an NZP CSI-RS which has no parameter indicating repetition (for example, repetition parameter) configured therefor, and trs-Info of which is not configured as "true", among CRI-RSs.

**[Table 7]**

| Valid TCI state configurations when the target antenna port is a CSI-RS for CSI | | | | |
|---|---|---|---|---|
| **Valid TCI state Configuration** | **DL RS 1** | **qcl-Type1** | **DL RS 2 (If configured)** | **qcl-Type2 (If configured)** |
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 8 enumerates valid TCI state configurations when the target antenna port is a CSI-RS for beam management (BM) (which has the same meaning as CSI-RS for L1 RSRP reporting). The CSI-RS for BM refers to an NZP CSI-RS which has a repetition parameter configured to have a value of "on" or "off", and trs-Info of which is not configured as "true", among CRI-RSs.

**[Table 8]**

| Valid TCI state configurations when the target antenna port is a CSI-RS for BM (for L1 RSRP reporting) | | | | |
|---|---|---|---|---|
| **Valid TCI state Configuration** | **DL RS 1** | **qcl-Type1** | **DL RS 2 (If configured)** | **qcl-Type2 (If configured)** |
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 9 enumerates valid TCI state configurations when the target antenna port is a PDCCH DMRS.

**[Table 9]**

| Valid TCI state configurations when the target antenna port is a PDCCH DMRS | | | | |
|---|---|---|---|---|
| **Valid TCI state Configuration** | **DL RS 1** | **qcl-Type1** | **DL RS 2 (If configured)** | **qcl-Type2 (If configured)** |
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 10 enumerates valid TCI state configurations when the target antenna port is a PDSCH DMRS.

**[Table 10]**

| Valid TCI state configurations when the target antenna port is a PDSCH DMRS | | | | |
|---|---|---|---|---|
| **Valid TCI state Configuration** | **DL RS 1** | **qcl-Type1** | **DL RS 2 (If configured)** | **qcl-Type2 (If configured)** |
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 6 to 10 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

### [Unified TCI state]

Hereinafter, a method for indicating and activating a single TCI state, based on a unified TCI scheme, will be described. The unified TCI scheme may refer to a scheme wherein, although existing Rel-15 and 16 have used a TCI state scheme for a UE's downlink reception and have used a spatial relation info scheme for uplink transmission (separate transmission/reception beam management scheme), the same is managed in an integrated manner by using a TCI state. Therefore, in a case where a UE receives an indication from a base station, based on the unified TCI scheme, the UE may perform beam management even for uplink transmission by using a TCI state. If the base station has configured a TCI-State (higher layer signaling) having a tci-stateId-r17 (higher layer signaling) for the UE, the UE may perform an operation based on the unified TCI scheme by using the TCI-State. The TCI-State may exist in two types (joint TCI state or separate TCI state).

The first type is a joint TCI state in which all TCI states to be applied to uplink transmission and downlink reception may be indicated to a UE by a base station through one TCI-State. If a TCI-State based on a joint TCI state has been indicated to the UE, a parameter to be used for downlink channel estimation may be indicated to the UE by using an RS corresponding to qcl-Typel in the TCI-State based on a joint TCI state, and a parameter to be used as a downlink reception beam or reception filter may be indicated to the UE by using an RS corresponding to qcl-Type2 therein. If a TCI-State based on a joint TCI state has been indicated to the UE, a parameter to be used as an uplink transmission beam or transmission filter may be indicated to the UE by using an RS corresponding to qcl-Type2 therein in the TCI-State based on a joint DL/UL TCI state. If a joint TCI state is indicated to the UE, the UE may apply the same beam to uplink transmission and downlink reception.

The second type is a separate TCI state in which a UL TCI state to be applied to uplink transmission and a DL TCI state to be applied to downlink reception may be individually indicated to a UE by a base station. If a UL TCI state is indicated to the UE, a parameter to be used as an uplink transmission beam or transmission filter may be indicated to the UE by using a reference RS or a source RS configured in the UL TCI state. If a DL TCI state is indicated to the UE, a parameter to be used in downlink channel estimation may be indicated to the UE by using an RS corresponding to qcl-Typel configured in the DL TCI state, and a parameter to be used as a downlink reception beam or reception filter may be indicated thereto by using an RS corresponding to qcl-Type2.

If a DL TCI state and a UL TCI state are indicated to the UE together, a parameter to be used as an uplink transmission beam or transmission filter may be indicated to the UE by using a reference RS or a source RS configured in the UL TCI state, a parameter to be used in downlink channel estimation may be indicated to the UE by using an RS corresponding to qcl-Typel configured in the DL TCI state, and a parameter to be used as a downlink reception beam or reception filter may be indicated thereto using an RS corresponding to qcl-Type2. If the DL TCI state indicated to the UE and the reference RS or source RS configured in the UL TCI state are different, the UE may apply individual beams to uplink transmission and downlink reception, respectively, based on the UL TCI state and DL TCI state indicated thereto.

A maximum of 128 joint TCI states may be configured for a particular bandwidth part in a particular cell for the UE by the base station through higher layer signaling, a maximum of 64 or 128 DL TCI states among separate TCI states may be configured for a particular bandwidth part in a particular cell through higher layer signaling, based on a UE capability report, and a DL TCI state among separate TCI states and a joint TCI state may use the same higher layer signaling structure. As an example, if 128 joint TCI states have been configured, and if 64 DL TCI states have been configured among separate TCI states, the 64 DL TCI states may be included in the 128 joint TCI states.

A maximum of 32 or 64 UL TCI states among separate TCI states may be configured for a particular bandwidth part in a particular cell through higher layer signaling, based on a UE capability report, and a UL TCI state among separate TCI states and a joint TCI state may also use the same higher layer signaling structure like the relation between a DL TCI state among separate TCI states and a joint TCI state, or a UL TCI state among separate TCI states may also use a higher layer signaling structure different from that of a joint TCI state and a DL TCI state among separate TCI states.

Such use of different or identical higher layer signaling structures may be defined in specifications, or may be distinguished through different higher layer signaling configured by the base station, based on a UE capability report containing information regarding which is to be used among two schemes that the UE may support.

The UE may use one scheme, among a joint TCI state and a separate TCI state configured by the base station, thereby receiving an indication regarding transmission/reception beam according to a unified TCI scheme. The base station may configure, for the UE, whether or not one of the joint TCI state and the separate TCI state is to be used, through higher layer signaling.

The UE may receive an indication regarding transmission/reception beam by using a scheme selected from a joint TCI state and a separate TCI state through higher layer signaling, and the base station may indicate a transmission/reception beam in two methods (a MAC-CE-based indication method and a MAC-CE-based activation and DCI-based indication method).

If the UE receives an indication regarding transmission/reception beam by using a joint TCI state through higher layer signaling, the UE may receive a MAC-CE indicating a joint TCI state from the base station, thereby performing a transmission/reception beam application operation, and the base station may schedule reception regarding a PDSCH including the MAC-CE for the UE through a PDCCH. If the MAC-CE includes one joint TCI state set, the UE may determine an uplink transmission beam or transmission filter and a downlink reception beam or reception filter by using joint TCI states included in the indicated joint TCI state set 3ms after transmission of a PUCCH including HARQ-ACK information indicating whether or not the PDSCH is successfully received. If the MAC-CE includes two or more joint TCI state sets, the UE may identify that multiple joint TCI state sets indicated by the MAC-CE correspond to respective codepoints of the TCI state field of DCI format 1_1 or 1_2 and then activate the indicated joint TCI state sets, 3ms after transmission of a PUCCH including HARQ-ACK information indicating whether or not the PDSCH is successfully received. Thereafter, the UE may receive DCI format 1_1 or 1_2 and may apply one joint TCI state indicated by the TCI state field in corresponding DCI to uplink transmission and downlink reception beams. DCI format 1_1 or 1_2 may include downlink data channel scheduling information (with DL assignment) or not include same (without DL assignment).

If the UE receives an indication regarding transmission/reception beam by using a separate TCI state through higher layer signaling, the UE may receive a MAC-CE indicating a separate TCI state from the base station, thereby performing a transmission/reception beam application operation, and the base station may schedule reception regarding a PDSCH including the MAC-CE for the UE through a PDCCH. If the MAC-CE includes one separate TCI state set, the UE may determine an uplink transmission beam or transmission filter and a downlink reception beam or reception filter by using separate TCI states included in the indicated separate TCI state set 3 ms after transmission of a PUCCH including HARQ-ACK information indicating whether or not the PDSCH is successfully received. A separate TCI state set may indicate a single or multiple separate TCI states which one codepoint of a TCI state field in DCI format 1_1 or 1_2 may have, and one separate TCI state set may include one DL TCI state, include one UL TCI state, or include one DL TCI state and one UL TCI state. If the MAC-CE includes two or more separate TCI state sets, the UE may identify that multiple separate TCI state sets indicated by the MAC-CE correspond to respective codepoints of the TCI state field of DCI format 1_1 or 1_2 and then activate the indicated separate TCI state sets, 3 ms after transmission of a PUCCH including HARQ-ACK information indicating whether or not the PDSCH is successfully received. Each codepoint of the TCI state field of DCI format 1_1 or 1_2 may indicate one DL TCI state, may indicate one UL TCI state, or may indicate one DL TCI state and one UL TCI state. The UE may receive DCI format 1_1 or 1_2 and may apply separate TCI state sets indicated by the TCI state field in corresponding DCI to uplink transmission and downlink reception beams. DCI format 1_1 or 1_2 may include downlink data channel scheduling information (with DL assignment) or may not include the same (without DL assignment).

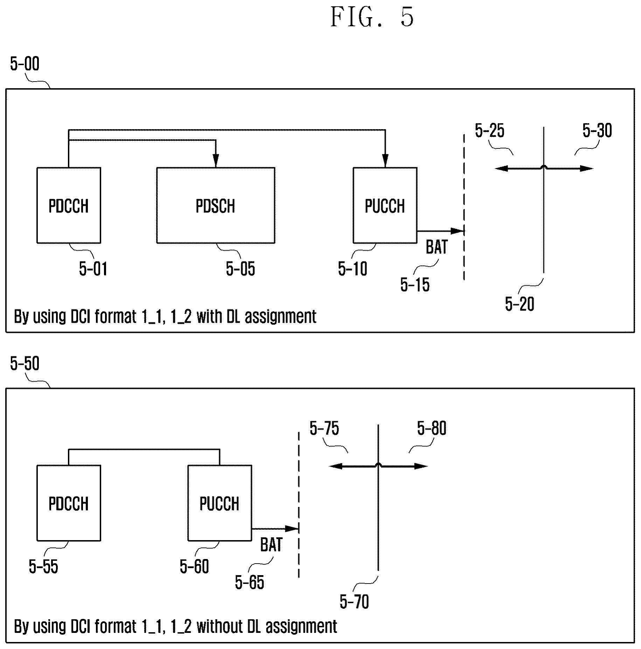

FIG. 5 illustrates a beam application time which may be considered in a case where a unified TCI scheme is used in a wireless communication system according to an embodiment of the disclosure. As described above, the UE may receive DCI format 1_1 or 1_2 including downlink data channel scheduling information (with DL assignment) or not including the same (without DL assignment) from the base station, and may apply one joint TCI state or separate TCI state set indicted by the TCI state field in corresponding DCI to uplink transmission and downlink reception beams.
- DCI format 1_1 or 1_2 with DL assignment (5-00): If a UE receives, from a base station, DCI format 1_1 or 1_2 including downlink data channel scheduling information (5-01) so that one joint TCI state or one separate TCI state set based on a unified TCI scheme is indicated, the UE may receive a PDSCH scheduled based on the received DCI (5-05), and transmit a PUCCH including a HARQ-ACK indicating whether reception of the DCI and the PDSCH has been successful (5-10). The HARQ-ACK may include whether reception has been successful, for both the DCI and the PDSCH, if the UE fails to receive at least one of the DCI and the PDSCH, the UE may transmit a NACK, and if the UE succeeds in receiving both of them, the UE may transmit an ACK.
- DCI format 1_1 or 1_2 without DL assignment (5-50): If a UE receives, from a base station, DCI format 1_1 or 1_2 not including downlink data channel scheduling information (5-55) so that one joint TCI state or one separate TCI state set based on a unified TCI scheme is indicated, the UE may assume at least one combination of the following items for the DCI.
   ■ The DCI includes a CRC scrambled using a CS-RNTI.
   ■ The values of all bits assigned to all fields used as redundancy version (RV) fields are 1.
   ■ The values of all bits assigned to all fields used as modulation and coding scheme (MCS) fields are 1.
   ■ The values of all bits assigned to all fields used as new data indication (NDI) fields are 0.
   ■ In a case of frequency domain resource allocation (FDRA) type 0, the values of all bits assigned to an FDRA field are 0, in a case of FDRA type 1, the values of all bits assigned to an FDRA field are 1, and in a case of an FDRA scheme being dynamicSwitch, the values of all bits assigned to an FDRA field are 0.

The UE may transmit a PUCCH including a HARQ-ACK indicating whether DCI format 1_1 or 1_2 for which the items described above are assumed has been successfully received (5-60).
- With respect to both DCI format 1_1 or 1_2 with DL assignment (5-00) and without DL assignment (5-50), if the new TCI state indicated through DCI 5-01 or 5-55 is the same as a TCI state that has previously been indicated and thus been being applied to uplink transmission and downlink reception beams, the UE may maintain the previously applied TCI state. If the new TCI state is different from the previously indicated TCI state, the UE may determine, as a time point for application of the joint TCI state or separate TCI state set, which is indicable by a TCI state field included in the DCI, a time point 5-30 or 5-80 after the first slot 5-20 or 5-70 after passage of a time interval as long as a beam application time (BAT) 5-15 or 5-65 after PUCCH transmission, and may use the previously indicated TCI state at a time point 5-25 or 5-75 before the slot 5-20 or 5-70.
- With respect to both DCI format 1_1 or 1_2 with DL assignment (5-00) and without DL assignment (5-50), the BAT is a particular number of OFDM symbols and may be configured through higher layer signaling, based on UE capability report information, and numerologies of the BAT and the first slot after the BAT may be determined based on the smallest numerology among all cells to which a joint TCI state or separate TCI state set indicated through DCI is applied.

A UE may apply one joint TCI state indicated through a MAC-CE or DCI to reception for control resource sets connected to all UE-specific search spaces, reception of a PDSCH scheduled by a PDCCH transmitted from the control resource sets and transmission of a PUSCH, and transmission of all PUCCH resources.

If one separate TCI state set indicated through a MAC-CE or DCI includes one DL TCI state, a UE may apply the one separate TCI state set to reception for control resource sets connected to all UE-specific search spaces and to reception of a PDSCH scheduled by a PDCCH transmitted from the control resource sets, and apply a previously indicated UL TCI state to all PUSCH and PUCCH resources.

If one separate TCI state set indicated through a MAC-CE or DCI includes one UL TCI state, a UE may apply the one separate TCI state set to all PUSCH and PUCCH resources, and apply a previously indicated DL TCI state to reception for control resource sets connected to all UE-specific search spaces and reception of a PDSCH scheduled by a PDCCH transmitted from the control resource sets.

If one separate TCI state set indicated through a MAC-CE or DCI includes one DL TCI state and one UL TCI state, a UE may apply the DL TCI state to reception for control resource sets connected to all UE-specific search spaces and reception of a PDSCH scheduled by a PDCCH transmitted from the control resource sets, and apply the UL TCI state to all PUSCH and PUCCH resources.

### [Unified TCI state MAC-CE]

Hereinafter, a single TCI state indication and activation method based on a unified TCI scheme is described. A PDSCH including a MAC-CE described below may be scheduled to a UE by a base station, and the UE may interpret each codepoint of a TCI state field in DCI format 1_1 or 1_2, based on information in the MAC-CE received from the base station, after 3 slots from transmission of a HARQ-ACK for the PDSCH to the base station. That is, the UE may activate each entry of the MAC-CE received from the base station in each codepoint of the TCI state field in DCI format 1_1 or 1_2.

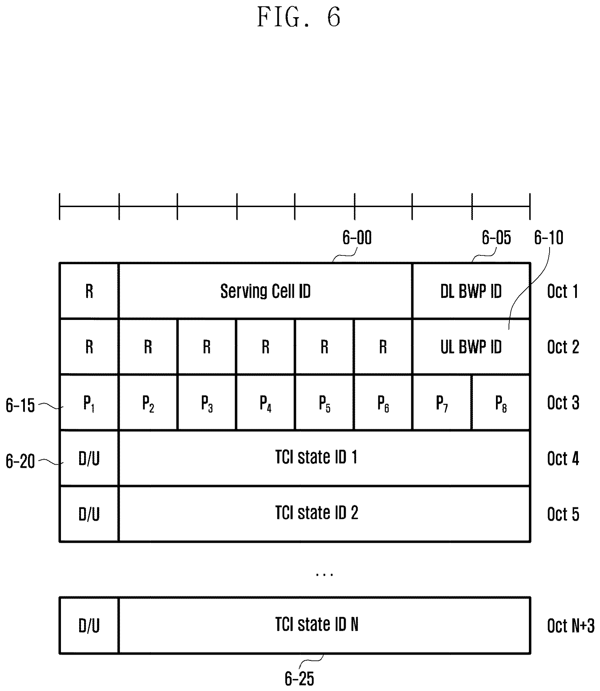

FIG. 6 illustrates another MAC-CE structure for activation and indication of a joint TCI state or a separate DL or UL TCI state in a wireless communication system according to an embodiment of the disclosure. Each field in the MAC-CE structure may have the following meaning.
- Serving Cell ID 6-00: This field may indicate which serving cell to which a corresponding MAC-CE is to be applied. The length of this field may be 5 bits. If a serving cell indicated by this field is included in at least one of the higher layer signaling simultaneousU-TCI-UpdateList1, simultaneousU-TCI-UpdateList2, simultaneousU-TCI-UpdateList3, or simultaneousU-TCI-UpdateList4, the MAC-CE may be applied to all serving cells included in one or more lists among simultaneousU-TCI-UpdateList1, simultaneousU-TCI-UpdateList2, simultaneousU-TCI-UpdateList3, or simultaneousU-TCI-UpdateList4, in which the serving cell indicated by the field is included.
- DL BWP ID 6-05: This field may indicate which DL BWP to which the MAC-CE is to be applied, and the meanings of codepoints in the field may correspond to codepoints of a bandwidth part indicator in DCI, respectively. The length of this field may be 2 bits.
- UL BWP ID 6-10: This field may indicate which UL BWP to which the MAC-CE is to be applied, and the meanings of codepoints in the field may correspond to codepoints of a bandwidth part indicator in DCI, respectively. The length of this field may be 2 bits.
- Pi 6-15: This field may indicate whether each codepoint of a TCI state field in DCI format 1_1 or 1_2 has multiple TCI states or one TCI state. If the value of Pi is 1, this indicates that a corresponding i-th codepoint has multiple TCI states, and may imply that the codepoint may include a separate DL TCI state and a separate UL TCI state. If the value of Pi is 0, this indicates that a corresponding i-th codepoint has a single TCI state, and may imply that the codepoint may include one type among a joint TCI state, a separate DCI TCI state, or a separate UL TCI state.
- D/U 6-20: This field may indicate whether a TCI state ID field in the same octet is a joint TCI state, a separate DL TCI state, or a separate UL TCI state. If the field is 1, a TCI state ID field in the same octet may be a joint TCI state or a separate DL TCI state, and If the field is 0, a TCI state ID field in the same octet may be a separate UL TCI state.
- TCI state ID 6-25: This field may indicate a TCI state identifiable by the higher layer signaling TCI-StateId. If the D/U field is configured to be 1, the TCI state ID field may be used to represent TCI-StateId expressible by 7 bits. If the D/U field is configured to be 0, a most significant bit (MSB) of the TCI state ID field may be considered as a reserved bit, and the remaining 6 bits may be used to represent the higher layer signaling UL-TCIState-Id. The number of maximally activatable TCI states may be 8 in a case of joint TCI states, and may be 16 in a case of separate DL or UL TCI states.
- R: This indicates a reserved bit and may be configured to be 0.

With respect to the MAC-CE structure of FIG. 6, a UE may include, in the MAC-CE structure, a third octet including P1, P2,..., and P8 fields in FIG. 6 regardless of unifiedTCI-StateType-r17 in MIMOparam-r17 in the higher layer signaling ServingCellConfig being configured to be joint or separate. In this case, the UE may perform TCI state activation by using a fixed MAC-CE structure regardless of higher layer signaling configured by a base station. As another example, with respect to the MAC-CE structure of FIG. 6, a UE may omit the third octet including P1, P2,..., and P8 fields illustrated in FIG. 6, in a case where unifiedTCI-StateType-r17 in MIMOparam-r17 in the higher layer signaling ServingCellConfig being configured to be joint. In this case, the UE may save the payload of the MAC-CE by a maximum of 8 bits according to higher layer signaling configured by a base station. In addition, all D/U fields positioned on the first bits in octets starting from a fourth octet in FIG. 6 may be considered as R fields, and all the R fields may be configured to be 0 bits.

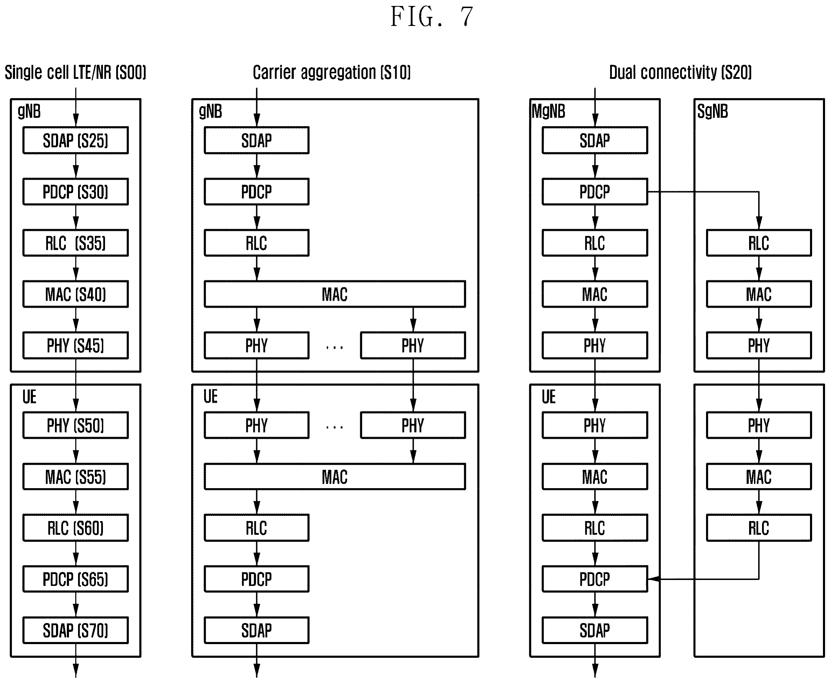

[Regarding CA/DC] FIG. 7 illustrates radio protocol structures of a base station and a UE in single cell, carrier aggregation, and dual connectivity situations according to an embodiment of the disclosure.

Referring to FIG. 7, a radio protocol of a mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.
- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.
- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the upper layer in sequence. The in-sequence delivery of the NR RLC device may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The above-mentioned out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

### [Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

### Rate matching operation

- The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

### Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol#1, symbol#2, symbol#3, symbol#4}, if resource A is {resource#1,resource#2, resource#3, resource#4}, and if resource B is {resource#3,resource#5}, the UE may assume that symbol sequence A {symbol#1, symbol#2,symbol#3, symbol#4} is mapped to resource A {resource#1, resource#2, resource#3,resource#4}, respectively, but {symbol#3} mapped to {resource#3} (corresponding to resource C) is not transmitted, and based on the assumption that symbol sequence {symbol#1, symbol#2, symbol#4}corresponding to remaining resources {resource#1, resource#2, resource#4} other than {resource#3} (corresponding to resource C) among resource A has been mapped and transmitted, the UE may receive the same. Consequently, the base station may transmit symbol sequence {symbol#1, symbol#2, symbol#4} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining area other than resource C among the resource area A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may assume that symbol sequence A {symbol#1, symbol#2, symbol#3, symbol#4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

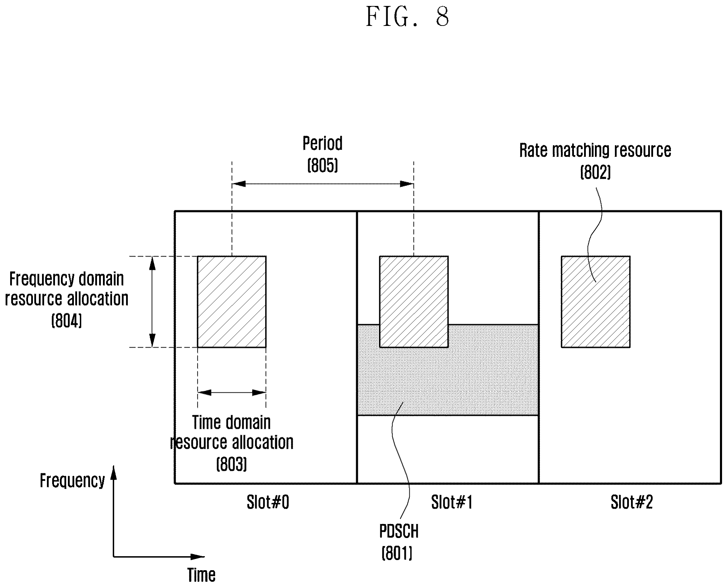

FIG. 8 illustrates a method in which a base station and a UE transmit/receive data in consideration of a downlink data channel and a rate matching resource in a wireless communication system according to an embodiment of the disclosure.

FIG. 8 illustrates a downlink data channel (PDSCH) 801 and a rate matching resource 802. The base station may configure one or multiple rate matching resources 802 for the UE through upper layer signaling (for example, RRC signaling). Rate matching resource 802 configuration information may include time-domain resource allocation information 803, frequency-domain resource allocation information 804, and periodicity information 805. A bitmap corresponding to the frequency-domain resource allocation information 804 will hereinafter be referred to as "first bitmap", a bitmap corresponding to the time-domain resource allocation information 803 will be referred to as "second bitmap", and a bitmap corresponding to the periodicity information 805 will be referred to as "third bitmap". If all or some of time and frequency resources of the scheduled PDSCH 801 overlap a configured rate matching resource 802, the base station may rate-match and transmit the PDSCH802 in a rate matching resource 801 part, and the UE may perform reception and decoding after assuming that the PDSCH 802 has been rate-matched in a rate matching resource 801 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2= {RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

### RB symbol level

The UE may have a maximum of four RateMatchPatterns configured per each bandwidth part through upper layer signaling, and one RateMatchPattern may include the following contents.
- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

### RE level

The UE may have the following contents configured through upper layer signaling.
- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.
- may include configuration information regarding a resource set corresponding to one or multiple zero power (ZP) CSI-RSs inside a bandwidth part.

### [PDCCH: regarding DCI]

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

**[Table 11]**

| |
|---|
| - Identifier for DCI formats - [1] bit |
| - Frequency domain resource assignment - [ $\left⌈{log}_{2}\left({N}_{RB}^{UL , BWP}\left({N}_{RB}^{UL , BWP}+1\right)/2\right)\right⌉$] bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example.

**[Table 12]**

| | | |
|---|---|---|
| - Carrier indicator - 0 or 3 bits | | |
| - UL/SUL indicator - 0 or 1 bit | | |
| - Identifier for DCI formats - [1] bits | | |
| - Bandwidth part indicator - 0, 1 or 2 bits | | |
| - Frequency domain resource assignment | | |
| | | • For resource allocation type 0, $\left⌈{N}_{RB}^{UL , BWP}/P\right⌉$ bits |
| | | • For resource allocation type 1, $\left⌈{log}_{2}\left({N}_{RB}^{UL , BWP}\left({N}_{RB}^{UL , BWP}+1\right)/2\right)\right⌉$ bits |
| - Time domain resource assignment -1, 2, 3, or 4 bits | | |
| - Virtual resource block (VRB)-to-physical resource block (PRB) mapping | | |
| | - 0 or 1 bit, only for resource allocation type 1. | |
| | | ● 0 bit if only resource allocation type 0 is configured; |
| | | ● 1 bit otherwise. |
| - Frequency hopping flag - 0 or 1 bit, only for resource allocation type 1. | | |
| | | ● 0 bit if only resource allocation type 0 is configured; |
| | | ● 1 bit otherwise. |
| - Modulation and coding scheme - 5 bits | | |
| - New data indicator - 1 bit | | |
| - Redundancy version - 2 bits | | |
| - HARQ process number - 4 bits | | |
| - 1 st downlink assignment index- 1 or 2 bits | | |
| | | ● 1 bit for semi-static HARQ-ACK codebook; |
| | | ● 2 bits for dynamic HARQ-ACK codebook with single HARQ-ACK codebook. |
| - 2nd downlink assignment index - 0 or 2 bits | | |
| | | ● 2 bits for dynamic HARQ-ACK codebook with two HARQ-ACK sub-codebooks; |
| | | ● 0 bit otherwise. |
| - TPC command for scheduled PUSCH - 2 bits | | |
| $\left⌈{log}_{2}\left({\sum }_{k = 1}^{{L}_{max}} \left(\begin{matrix}{N}_{SRS} \\ k\end{matrix}\right)\right)\right⌉$ - SRS resource indicator - or $\left⌈{log}_{2}\left({N}_{SRS}\right)\right⌉$ bits | | |
| $\left⌈{log}_{2}\left({\sum }_{k = 1}^{{L}_{max}} \left(\begin{matrix}{N}_{SRS} \\ k\end{matrix}\right)\right)\right⌉$ • bits for non-codebook based PUSCH transmission; | | |
| • $\left⌈{log}_{2}\left({N}_{SRS}\right)\right⌉$ bits for codebook based PUSCH transmission. | | |
| - Precoding information and number of layers - up to 6 bits | | |
| - Antenna ports - up to 5 bits | | |
| - SRS request - 2 bits | | |
| - Channel state information (CSI) request - 0, 1, 2, 3, 4, 5, or 6 bits | | |
| - Code block group (CBG) transmission information - 0, 2, 4, 6, or 8 bits | | |
| - Phase tracking reference signal (PTRS)-demodulation reference signal (DDMRS) association - 0 or 2 bits. | | |
| - beta _offset indicator - 0 or 2 bits | | |
| - DMRS sequence initialization - 0 or 1 bit | | |

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

**[Table 13]**

| |
|---|
| - Identifier for DCI formats - [1] bit |
| - Frequency domain resource assignment - $\left[\left⌈{log}_{2}\left({N}_{RB}^{DL , BWP}\left({N}_{RB}^{DL , BWP}+1\right)/2\right)\right⌉\right]$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - Physical uplink control channel (PUCCH) resource indicator - 3 bits |
| - PDSCH-to-HARQ feedback timing indicator - [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

**[Table 14]**

| | | |
|---|---|---|
| | - Carrier indicator - 0 or 3 bits | |
| | - Identifier for DCI formats - [1] bits | |
| | - Bandwidth part indicator - 0, 1 or 2 bits | |
| | - Frequency domain resource assignment | |
| | | • For resource allocation type 0, $\left⌈{N}_{RB}^{DL , BWP}/P\right⌉$ bits |
| | | • For resource allocation type 1, $\left⌈{log}_{2}\left({N}_{RB}^{DL , BWP}\left({N}_{RB}^{DL , BWP}+1\right)/2\right)\right⌉$ bits |
| | - Time domain resource assignment -1, 2, 3, or 4 bits | |
| | - VRB-to-PRB mapping - 0 or 1 bit, only for resource allocation type 1. | |
| | | ● 0 bit if only resource allocation type 0 is configured; |
| | | ● 1 bit otherwise. |
| | - Physical resource block (PRB) bundling size indicator - 0 or 1 bit | |
| | - Rate matching indicator - 0, 1, or 2 bits | |
| | - Zero power (ZP) channel state information (CSI)-reference signal (RS) trigger - 0, 1, or 2 bits | |
| For transport block 1: | | |
| | - Modulation and coding scheme - 5 bits | |
| | - New data indicator - 1 bit | |
| | - Redundancy version - 2 bits | |
| For transport block 2: | | |
| | - Modulation and coding scheme - 5 bits | |
| | - New data indicator - 1 bit | |
| | - Redundancy version - 2 bits | |
| | - HARQ process number - 4 bits | |
| | - Downlink assignment index - 0 or 2 or 4 bits | |
| | - TPC command for scheduled PUCCH - 2 bits | |
| | - PUCCH resource indicator - 3 bits | |
| | - PDSCH-to-HARQ_feedback timing indicator - 3 bits | |
| | - Antenna ports - 4, 5 or 6 bits | |
| | - Transmission configuration indication - 0 or 3 bits | |
| | - SRS request - 2 bits | |
| | - CBG transmission information - 0, 2, 4, 6, or 8 bits | |
| | - CBG flushing out information - 0 or 1 bit | |
| | - DMRS sequence initialization - 1 bit | |

### [PDCCH: CORESET, REG, CCE, and Search Space]

Hereinafter, a downlink control channel in a 5G communication system will be described in more detail with reference to the accompanying drawings.

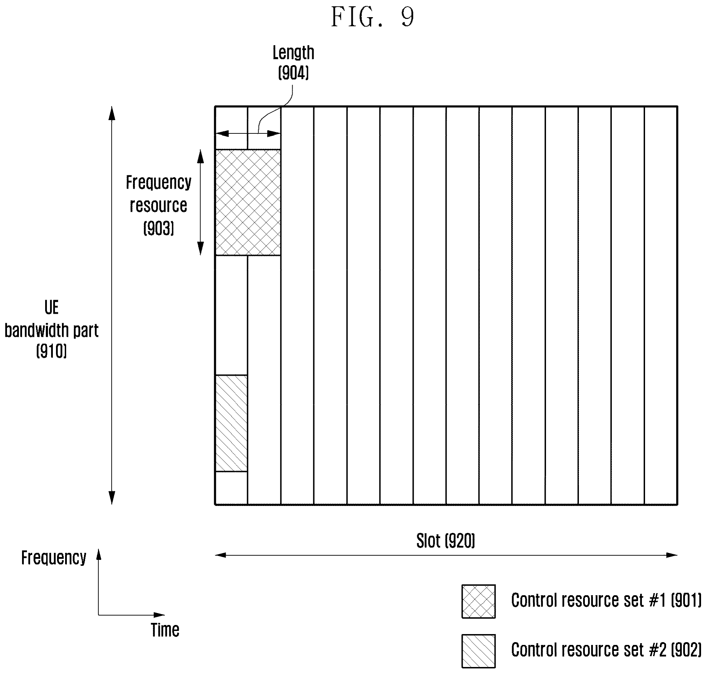

FIG. 9 illustrates an example of a control resource set (CORESET) used to transmit a downlink control channel in a 5G wireless communication system. FIG. 9 illustrates an example in which a UE bandwidth part 910 is configured along the frequency axis, and two control resource sets (control resource set #1 901 and control resource set #2 902) are configured within one slot 920 along the time axis. The control resource sets 901 and 902 may be configured in a specific frequency resource %n within the entire UE bandwidth part %n along the frequency axis. The control resource sets 901 and 902 may be each configured as one or multiple OFDM symbols along the time domain, and the number of the OFDM symbols may be defined as a control resource set duration 904. Referring to the example illustrated in FIG. 9, control resource set #1 901 is configured to have a control resource set duration corresponding to two symbols, and control resource set #2 902 is configured to have a control resource set duration corresponding to one symbol.

A control resource set in 5G described above may be configured for a UE by a base station through upper layer signaling (for example, system information, master information block (MIB), radio resource control (RRC)signaling). The description that a control resource set is configured for a UE means that information such as a control resource set identity, the control resource set's frequency location, and the control resource set's symbol duration is provided. For example, the following pieces of information may be included.

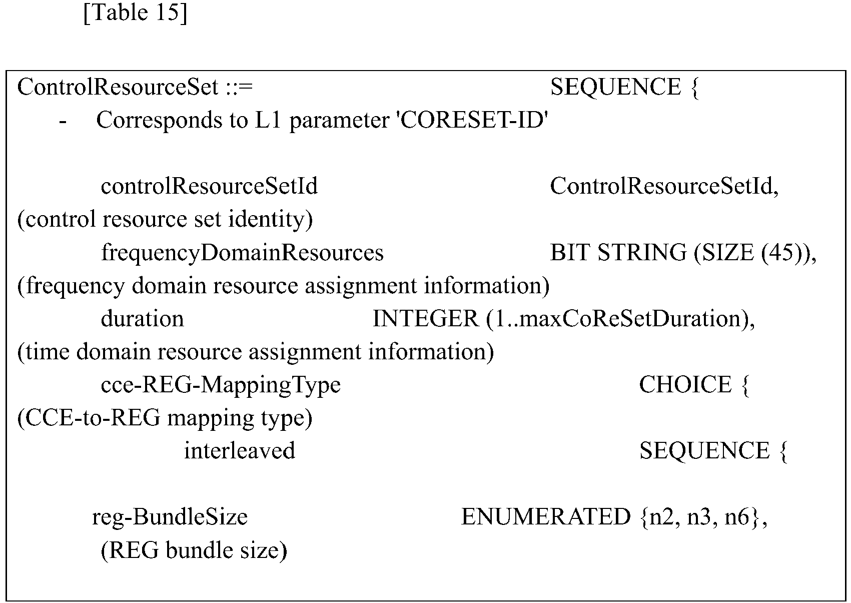

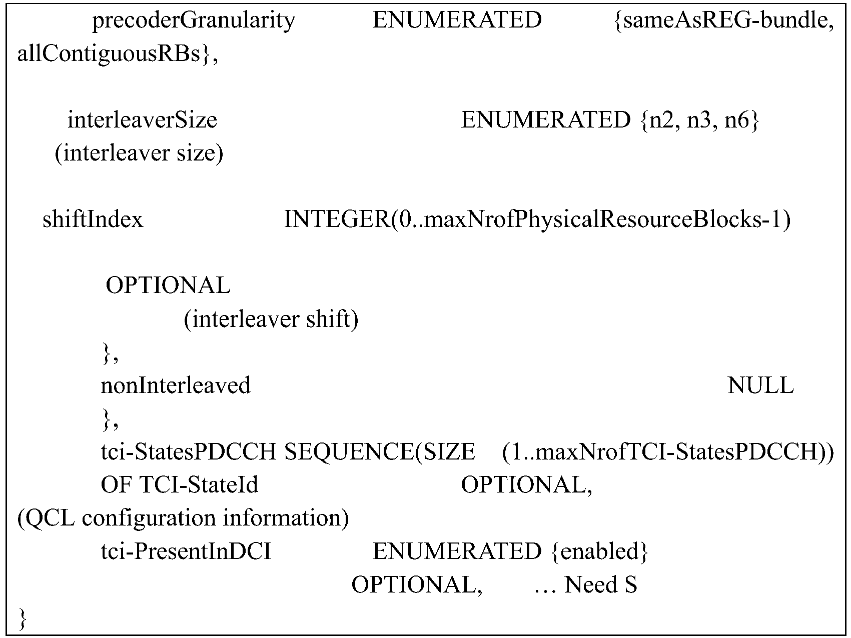

In Table 15, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

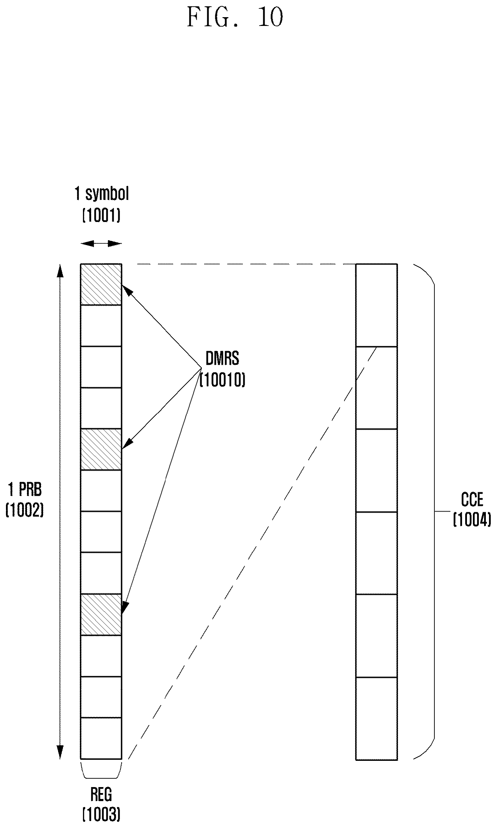

FIG. 10 illustrates an example of a basic unit of time and frequency resources constituting a downlink control channel available in a 5G system. According to FIG. 10, the basic unit of time and frequency resources constituting a control channel may be referred to as a resource element group (REG) 1003, and the REG 1003 may be defined by one OFDM symbol 1001 along the time axis and one physical resource block (PRB) 1002, that is, 12 subcarriers, along the frequency axis. The base station may configure a downlink control channel allocation unit by concatenating the REGs 1003.

Provided that the basic unit of downlink control channel allocation in 5G is a control channel element 1004 as illustrated in FIG. 10, one CCE 1004 may include multiple REGs 1003. To describe the REG 1003 illustrated in FIG. 10, for example, the REG 1003 may include 12 REs, and if one CCE 1004 includes six REGs 1003, one CCE 1004 may then include 72 REs. A downlink control resource set, once configured, may include multiple CCEs 1004, and a specific downlink control channel may be mapped to one or multiple CCEs 1004 and then transmitted according to the aggregation level (AL) in the control resource set. The CCEs 1004 in the control resource set are distinguished by numbers, and the numbers of CCEs 1004 may be allocated according to a logical mapping scheme.

The basic unit of the downlink control channel illustrated in FIG. 10, that is, the REG 1003, may include both REs to which DCI is mapped, and an area to which a reference signal (DMRS 1005) for decoding the same is mapped. As in FIG. 10, three DRMSs 1005 may be transmitted inside one REG 1003. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information may be included.

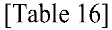

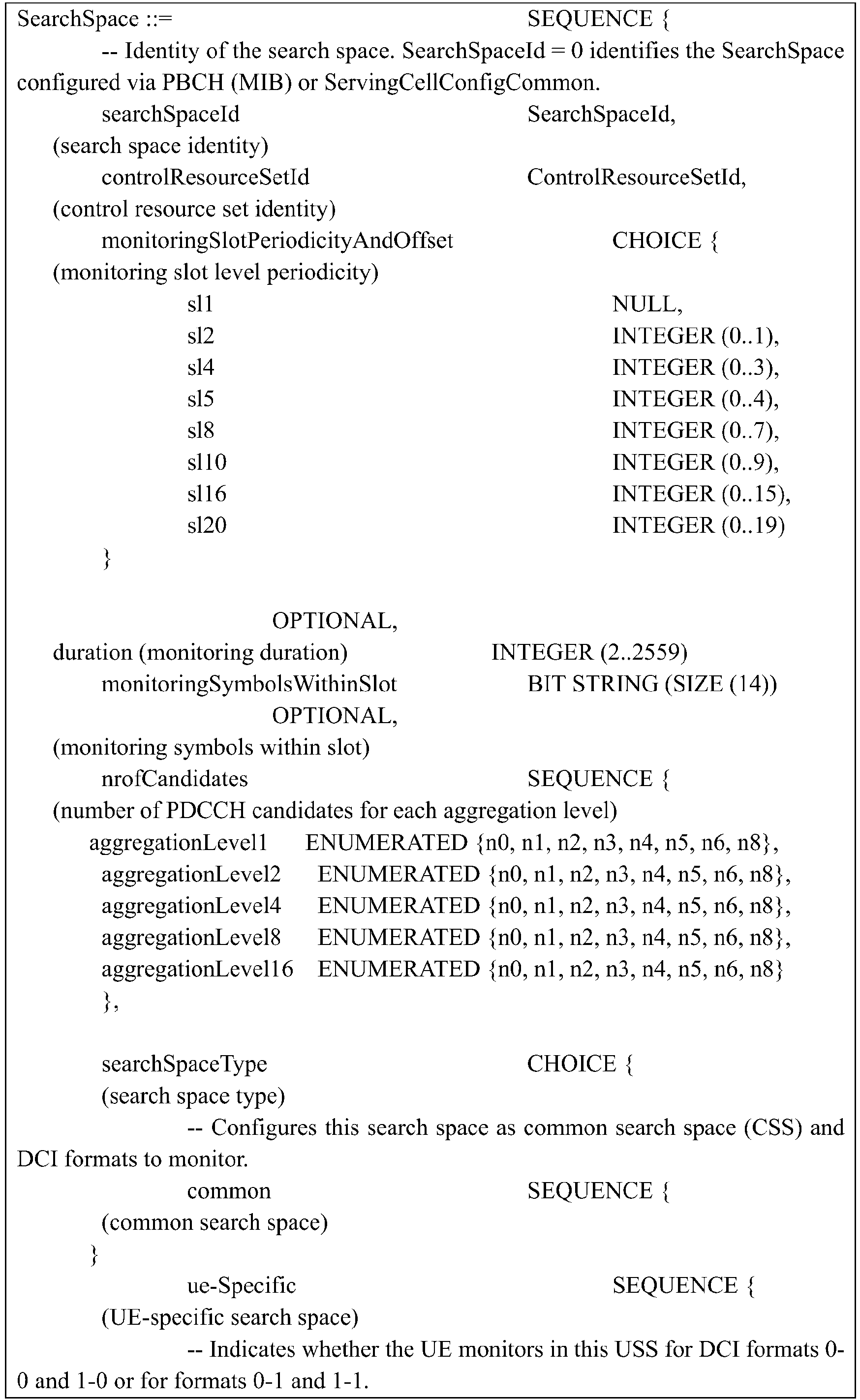

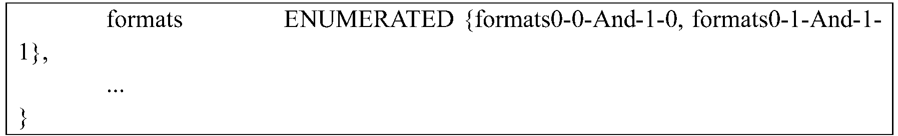

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.
- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.
- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given below.

**[Table 17]**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.$L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊\frac{{N}_{CCE , p}}{L}\right⌋\right\} + i$
- *L*: aggregation level
- *n_{CI}*: carrier index
- *N_{CCE},ₚ*: total number of CCEs existing in control resource set *p*
- ${n}_{s , f}^{μ}$: slot index
- ${M}_{s , max}^{\left(L\right)}$: number of PDCCH candidates at aggregation level L
- ${m}_{s , {n}_{CI}} = 0 , … , {M}_{s , max}^{\left(L\right)} - 1$: PDCCH candidate index at aggregation level L
- *i* = 0, ..., *L -1*
- ${Y}_{p , {n}_{s , f}^{μ}} = \left({A}_{p}⋅{Y}_{p , {n}_{s , f}^{μ} - 1}\right) mod D$, *Yₚ,-₁ = ⁿ_{RNTI} ≠* 0 , *Aₚ =* 39827 *for pmod*3 = 0,
   *Aₚ* = 39829 *for pmod*3 *=* 1, *Aₚ* = 39839 *f or pmod*3 = 2, *D* = 65537
- *n_{RNTI}:* UE identity

The ${Y}_{p , {n}_{s , f}^{μ}}$ value may correspond to 0 in the case of a common search space.

The ${Y}_{p , {n}_{s , f}^{μ}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

### [PDCCH: regarding TCI state]

Specific TCI state combinations applicable to a PDCCH DMRS antenna port may be given in Table 18 below. The fourth row in Table 18 corresponds to a combination assumed by the UE before RRC configuration, and no configuration is possible after the RRC.

**[Table 18]**

| **Valid TCI state Configuration** | **DLRS 1** | **qcl-Typel** | **DL RS 2 (if configured)** | **qcl-Type2 (if configured)** |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

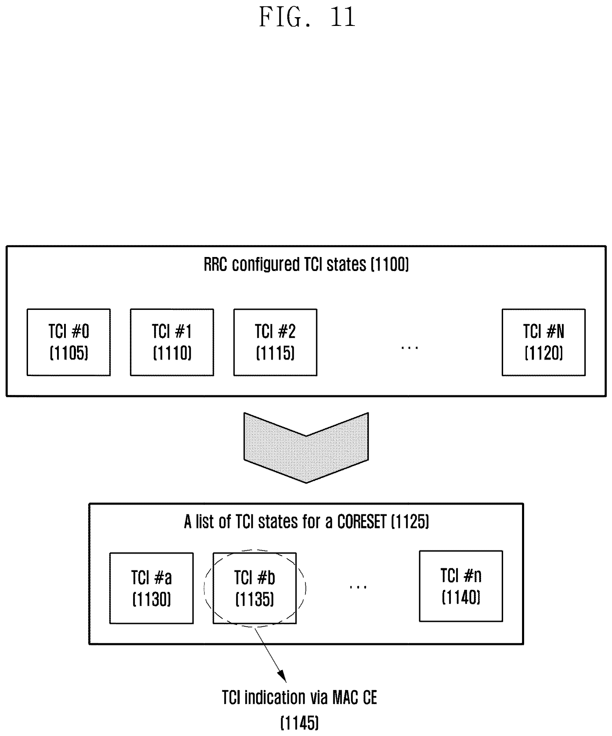

In NR, a hierarchical signaling method as illustrated in FIG. 11 is supported for dynamic allocation regarding a PDCCH beam. Referring to FIG. 11, the base station may configure N TCI states 1105, 1110, ..., 1120 for the UE through RRC signaling 1100, and may configure some thereof as TCI states for a CORESET (1125). The base station may then indicate one of the TCI states 1130, 1135, and 1140 for the CORESET to the UE through MAC CE signaling (1145). The UE may then receive a PDCCH, based on beam information included in the TCI state indicated by the MAC CE signaling.

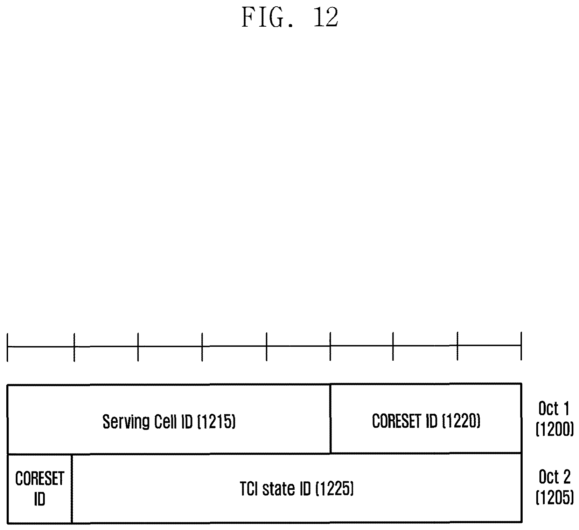

FIG. 12 illustrates a TCI indication MAC CE signaling structure for the PDCCH DMRS. Referring to FIG. 12, the TCI indication MAC CE signaling for the PDCCH DMRS may be configured by 2 bytes (16bits), and include a 5-bit serving cell ID 1215, a 4-bit CORESET ID 1220, and a 7-bit TCI state ID 1225.

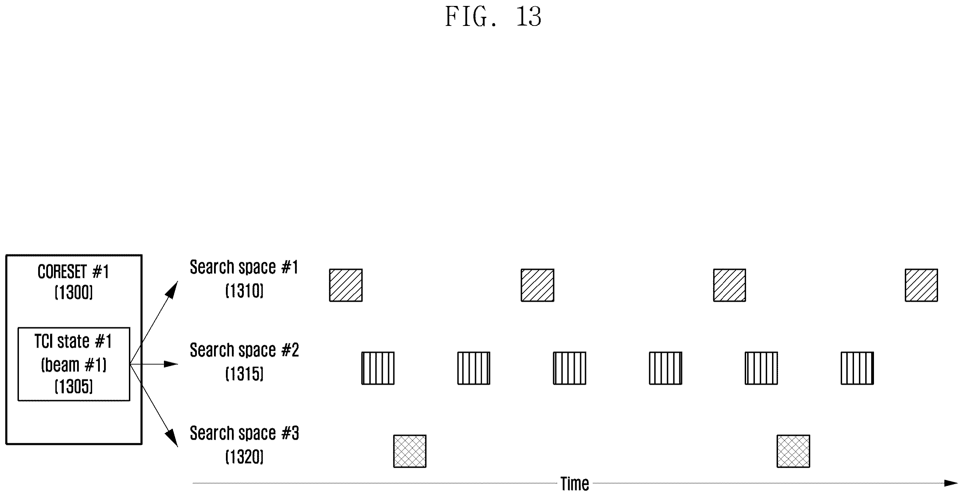

FIG. 13 illustrates an example of a beam configuration with regard to a control resource set (CORESET) and a search space according to the above description. Referring to FIG. 13, the base station may indicate one of TCI state lists included in CORESET 1300 configuration through MAC CE signaling (1305). Until a different TCI state is indicated for the corresponding CORESET through different MAC CE signaling, the UE may consider that identical QCL information (beam #1) 1305 is all applied to one or more search spaces 1310, 1315, and 1320 connected to the CORESET. The above-described PDCCH beam allocation method may have a problem in that it is difficult to indicate a beam change faster than MAC CE signaling delay, and the same beam is unilaterally applied to each CORESET regardless of search space characteristics, thereby making flexible PDCCH beam operation difficult. Following embodiments of the disclosure provide more flexible PDCCH beam configuration and operation methods. Although multiple distinctive examples will be provided for convenience of description of embodiments of the disclosure, they are not mutually exclusive, and can be combined and applied appropriately for each situation.

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. Based on the activation command regarding the TCI state received through the MAC CE, the UE may correctly receive the DMRS of the corresponding CORESET, based on QCL information in the activated TCI state.

With regard to a control resource set having a configured index of 0 (control resource set #0), if the UE has failed to receive a MAC CE activation command regarding the TCI state of control resource set #0, the UE may assume that the DMRS transmitted in CORESET #0has been QCL-ed with a SS/PBCH block identified in the initial access process, or in a non-contention-based random access process not triggered by a PDCCH command.

With regard to a control resource set having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

### [PDSCH: regarding frequency resource allocation]

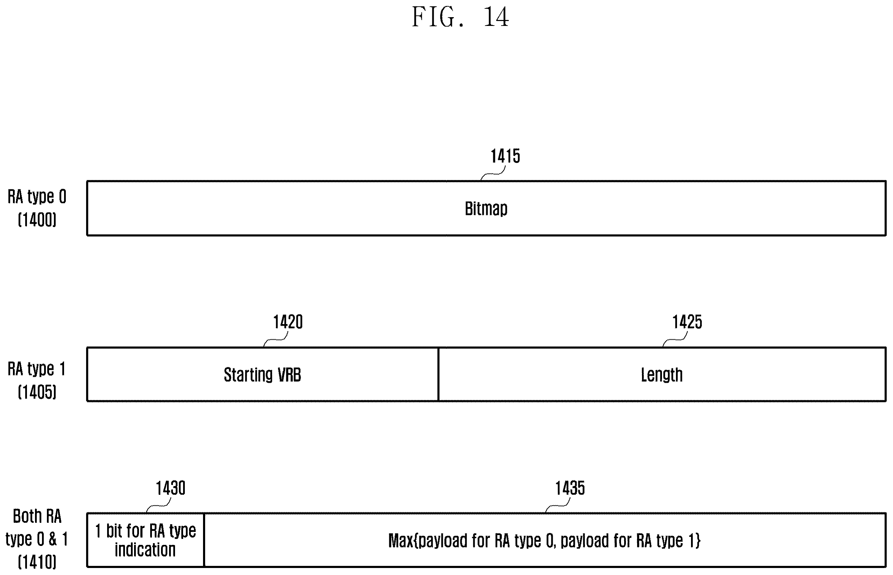

FIG. 14 illustrates an example of frequency domain resource allocation with regard to a PDSCH in a wireless communication system according to an embodiment of the disclosure.

FIG. 14 illustrates three frequency domain resource allocation methods of type 0 1400, type 1 1405, and dynamic switch 1410 which can be configured through an upper layer in an NR wireless communication system.

Referring to FIG. 14, in the case in which a UE is configured to use only resource type 0 through upper layer signaling (1400), partial downlink control information (DCI) for allocating a PDSCH to the UE include a bitmap including N__{RBG} bits. The conditions for this will be described again later. As used herein, N__{RBG} refers to the number of resource block groups (RBGs) determined according to the BWP size allocated by a BWP indicator and upper layer parameter rbg-Size, as in Table 19 below, and data is transmitted in RBGs indicated as "1" by the bitmap.

**[Table 19]**

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |
| 145 - 275 | 16 | 16 |

In the case in which the UE is configured to use only resource type 1 through upper layer signaling (1405), partial DCI includes frequency domain resource allocation information including $\left[{log}_{2}\left({N}_{RB}^{DL , BWP}\left({N}_{RB}^{DL , BWP}+1\right)/2\right.\right]$ bits. The conditions for this will be described again later. The base station may thereby configure a starting VRB 1420 and the length 1425 of a frequency domain resource allocated continuously therefrom.

In the case in which the UE is configured to use both resource type 0 and resource type 1 through upper layer signaling (1410), partial DCI for allocating a PDSCH to the corresponding UE includes frequency domain resource allocation information including as many bits as the larger value 1435 between the payload 1415 for configuring resource type 0 and the payload 1420 and 1425 for configuring resource type 1. The conditions for this will be described again later. One bit 1430 may be added to the foremost part (MSB) of the frequency domain resource allocation information inside the DCI, and if the bit 1430 has the value of "0", use of resource type 0 may be indicated, and if the bit has the value of "1", use of resource type 1 may be indicated.

### [PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 20 or Table 21 below may be transmitted from the base station to the UE.

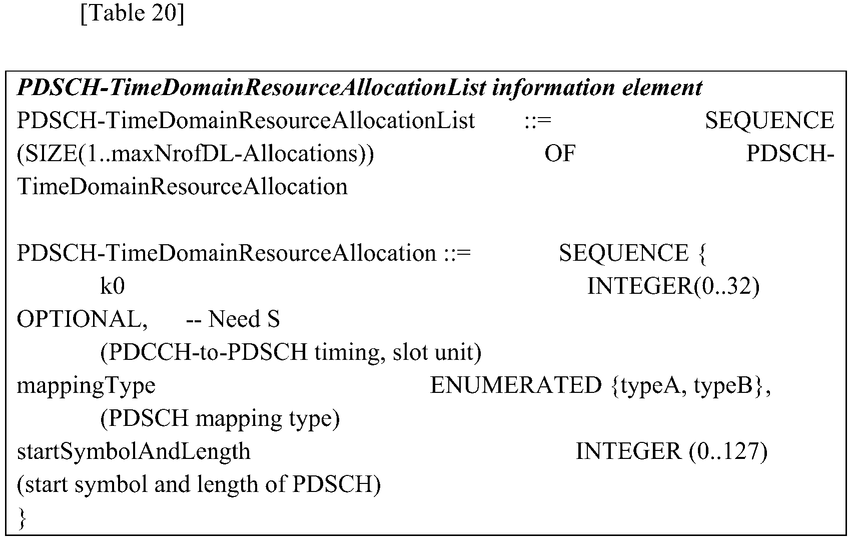

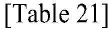

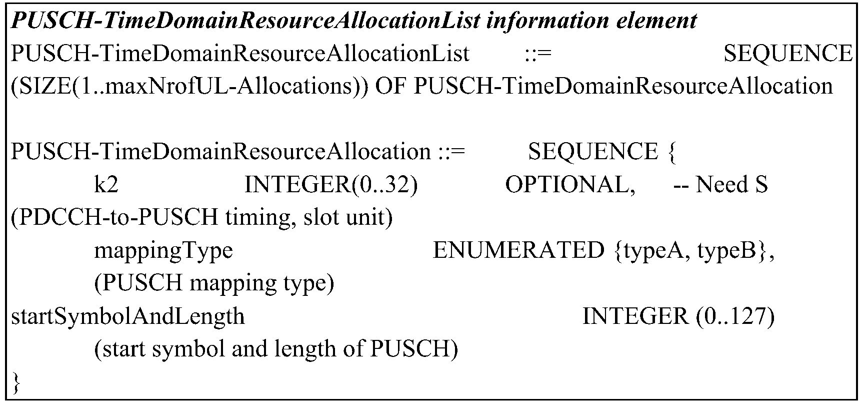

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

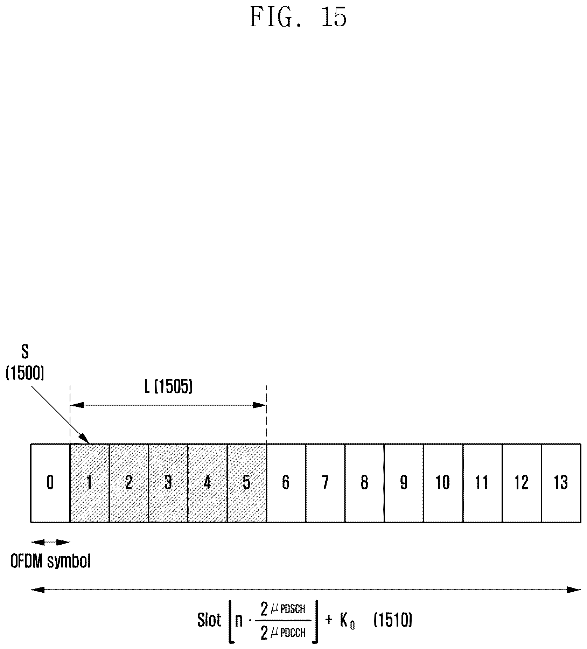

FIG. 15 illustrates an example of time domain resource allocation with regard to a PDSCH in a wireless communication system according to an embodiment of the disclosure.

Referring to FIG. 15, the base station may indicate the time domain location of a PDSCH resource according to the subcarrier spacing (SCS) (µ_{PDSCH}, µ_{PDCCH}) of a data channel and a control channel configured by using an upper layer, the scheduling offset (K0) value, and the OFDM symbol start location 1500 and length 1505 within one slot dynamically indicated through DCI.

### [PDSCH: processing time]

Next, a PDSCH processing time (PDSCH processing procedure time) will be described. If the base station schedules the UE to transmit a PDSCH by using DCI format 1_ 0, 1_1 or 1_2, the UE may need a PDSCH processing time for receiving a PDSCH by applying a transmission method (modulation/demodulation and coding indication index (MCS), demodulation reference signal-related information, time and frequency resource allocation information, and the like) indicated through DCI. The PUSCH preparation procedure time is defined in NR in consideration thereof. The PUSCH processing time of the UE may follow Equation 2 given below.${T}_{proc , 1} = \left({N}_{1}+{d}_{1,1}+{d}_{2}\right) \left(2048+144\right) κ {2}^{- μ} {T}_{c} + {T}_{ext}$

Each parameter in T_{proc,1} described above in Equation 2 may have the following meaning.
- *N₁:* the number of symbols determined according to UE processing capability 1 or 2 based on the UE's capability and numerology µ. *N₁* may have a value in Table 22 if UE processing capability 1 is reported according to the UE's capability report, and may have a value in Table 23 if UE processing capability 2 is reported, and if availability of UE processing capability 2 is configured through upper layer signaling. The numerology µ may correspond to the minimum value among µ_{PDCCH}, µ_{PDSCH}, µ_{UL} so as to maximize *T_{proc,1},* and µ_{PDCCH}, µ_{PPDSCH}, µ_{UL} may refer to the numerology of a PDCCH that scheduled a PDSCH, the numerology of the scheduled PDSCH, and numerology of an uplink channel in which a HARQ-ACK is to be transmitted.

**[Table 22] PDSCH processing time in the case of PDSCH processing capability 1**

| µ | PDSCH decoding time N₁ [symbols] | |
|---|---|---|
| | If PDSCH mapping type A and B both correspond to dmrs-AdditionalPosition *=* pos0 inside DMRS-DownlinkConfig which is upper layer signaling | If PDSCH mapping type A and B both do not correspond to dmrs-AdditionalPosition *=* pos0 inside DMRS-DownlinkConfig which is upper layer signaling, or if no upper layer parameter is configured |
| 0 | 8 | N_{1,0} |
| 1 | 10 | 13 |
| 2 | 17 | 20 |
| 3 | 20 | 24 |

**[Table 23] PDSCH processing time in the case of PDSCH processing capability 2**

| µ | PDSCH decoding time N₁ [symbols] |
|---|---|
| | If PDSCH mapping type A and B both correspond to dmrs-AdditionalPosition = pos0 inside DMRS-DownlinkConfig which is upper layer signaling |
| 0 | 3 |
| 1 | 4.5 |
| 2 | 9 for frequency range 1 |

- κ: 64
- Text: if the UE uses a shared spectrum channel access scheme, the UE may calculate Text and apply the same to the PDSCH processing time. Otherwise, Text is assumed to be 0.
- If 1₁ which represents the PDSCH DMRS location value is 12, N_{1,0} in Table 22 above has the value of 14, and otherwise has the value of 13.
- With regard to PDSCH mapping type A, if the last symbol of the PDSCH is the i^{th} symbol in the slot in which the PDSCH is transmitted, and if i<7, d_{1,1} is then 7-i, and d_{1,1} is otherwise 0.
- d₂: if a PUCCH having a high priority index temporally overlaps another PUCCH or a PUSCH having a low priority index, d₂ of the PUCCH having a high priority index may be configured as a value reported from the UE. Otherwise, d₂ is 0.
- If PDSCH mapping type B is used with regard to UE processing capability 1, the d_{1,1} value may be determined by the number (L) of symbols of a scheduled PDSCH and the number of overlapping symbols between the PDCCH that schedules the PDSCH and the scheduled PDSCH, as follows.
- If L ≥ 7, then d_{1,1} = 0.
- If - L ≥ 4 and L ≤ 6, then d_{1,1} = 7 - L.
- If L = 3, then d_{1,1} = min (d, 1).
- If L=2, then d_{1,1} = 3 +d.
- If PDSCH mapping type B is used with regard to UE processing capability 2, the d_{1,1} value may be determined by the number (L) of symbols of a scheduled PDSCH and the number of overlapping symbols between the PDCCH that schedules the PDSCH and the scheduled PDSCH, as follows.
- If L ≥ 7, then d_{1,1} = 0.
- If - L ≥ 4 and L ≤ 6, then d_{1,1} = 7 - L.
- If L=2,
- If the scheduling PDCCH exists inside a CORESET including three symbols, and if the CORESET and the scheduled PDSCH have the same start symbol, then d_{1,1} = 3.
- Otherwise, d_{1,1} = d.
- In the case of a UE supporting capability 2 inside a given serving cell, the PDSCH processing time based on UE processing capability 2 may be applied by the UE if processingType2Enabled (upper layer signaling) is configured as "enable" with regard to the corresponding cell.

If the location of the first uplink transmission symbol of a PUCCH including HARQ-ACK information (in connection with the corresponding location, K₁- defined as the HARQ-ACK transmission timepoint, a PUCCH resource used to transmit the HARQ-ACK, and the timing advance effect may be considered) does not start earlier than the first uplink transmission symbol that comes after the last symbol of the PDSCH over a time of Tproc,1, the UE needs to transmit a valid HARQ-ACK message. That is, the UE needs to transmit a PUCCH including a HARQ-ACK only if the PDSCH processing time is sufficient. The UE cannot otherwise provide the base station with valid HARQ-ACK information corresponding to the scheduled PDSCH. The Tproc,1 may be used in the case of both a normal and an extended CP. In the case of a PDSCH having two PDSCH transmission locations configured inside one slot, d1,1 is calculated with reference to the first PDSCH transmission location inside the corresponding slot.

### [Regarding UE capability report]

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.
1. If the UE receives a list regarding LTE and/or NR bands from the base station at a UE capability request, the UE constructs band combinations (BCs) regarding EN-DC and NR standalone (SA). That is, the UE configures a candidate list of BCs regarding EN-DC and NR SA, based on bands received from the base station at a request through FreqBandList. In addition, bands may have priority in the order described in FreqBandList.
2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.
3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".
4. The UE selects BCs appropriate for the requested RAT type from the final "candidate BC list" and configures BCs to report. In this step, the UE configures supportedBandCombinationList in a determined order. That is, the UE configures BCs and UE capability to report according to a preconfigured rat-Type order. (nr -> eutra-nr - > eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.
5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

### [Regarding NC-JT]

According to an embodiment of the disclosure, in order to receive a PDSCH from a plurality of TRPs, the UE may use non-coherent joint transmission (NC-JT).

Unlike the conventional system, the 5G wireless communication system may support not only a service requiring a high transmission rate, but also a service having a very short transmission delay and a service requiring a high connection density. In a wireless communication network including multiple cells, transmission and reception points (TRPs), or beams, cooperative communication (coordinated transmission) between the respective cells, TRPs, or/and beams may satisfy various service requirements by enhancing the strength of a signal received by a UE or efficiently performing interference control between the respective cells, TRPs, or/and beams.

Joint transmission (JT) is a representative transmission scheme for the aforementioned cooperative communication, and is a scheme for increasing the strength or throughput of a signal received by a UE, by transmitting the signal to one UE via multiple different cells, TRPs, and/or beams. In this case, channels between the UE and the respective cells, TRPs, and/or beams may have significantly different characteristics, and in particular, non-coherent joint transmission (NC-JT) supporting non-coherent precoding between the respective cells, TRPs, and/or beams may require individual precoding, MCS, resource allocation, TCI indication, etc. according to a channel characteristic for each link between the UE and the respective cells, TRPs, and/or beams.

The above-described NC-JT transmission may be applied to at least one of a downlink data channel (PDSCH), a downlink control channel (PDCCH), an uplink data channel (PUSCH), and an uplink control channel (PUCCH). During PDSCH transmission, transmission information such as precoding, MCS, resource allocation, and TCI may be indicated through DL DCI, and should be independently indicated for each cell, TRP, and/or beam for the NC-JT. This is a significant factor that increases payload required for DL DCI transmission, which may have a bad influence on reception performance of a PDCCH for transmitting the DCI. Accordingly, in order to support JT of the PDSCH, carefully designing a tradeoff between an amount of DCI information and reception performance of control information is required.

FIG. 10 illustrates a configuration of antenna ports and an example of resource allocation for transmitting a PDSCH using cooperative communication in a wireless communication system according to an embodiment of the disclosure.

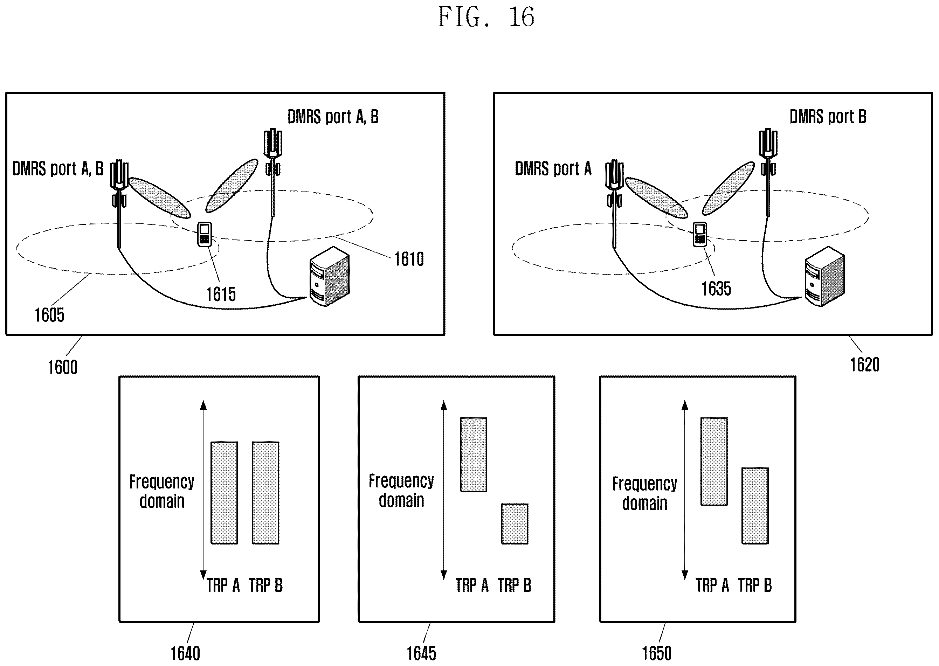

Referring to FIG. 16, the example for PDSCH transmission is described for each scheme of joint transmission (JT), and examples for allocating radio resources for each TRP are described.

Referring to FIG. 16, an example 1600 of coherent joint transmission (C-JT) supporting coherent precoding between respective cells, TRPs, and/or beams is illustrated.

In the case of C-JT, a TRP A 1605 and a TRP B 1610 transmit single data (PDSCH) to a UE 1615, and multiple TRPs may perform joint precoding. This may signify that the TRP A 1605 and a TRP B 1610 transmit DMRSs through the same DMRS ports in order to transmit the same PDSCH. For example, the TRP A 1605 and a TRP B 1610 may transmit DMRSs to the UE through a DMRS port A and a DMRS port B, respectively. In this case, the UE may receive one piece of DCI information for receiving one PDSCH demodulated based on the DMRSs transmitted through the DMRS port A and the DMRS port B.

FIG. 16 illustrates an example 1620 of non-coherent joint transmission (NC-JT) supporting non-coherent precoding between respective cells, TRPs, or/and beams for PDSCH transmission.

In the case of NC-JT, the PDSCH is transmitted to a UE 1635 per cell, per TPR, and/or per beam, and individual precoding may be applied to each PDSCH. Respective cells, TRPs, and/or beams may transmit different PDSCHs or different PDSCH layers to the UE, thereby improving throughput compared to single cell, TRP, and/or beam transmission. Furthermore, the respective cells, TRPs, and/or beams may repeatedly transmit the same PDSCH to the UE, thereby improving reliability as compared to single cell, TRP, and/or beam transmission. For the sake of descriptive convenience, a cell, a TRP, and/or a beam may be collectively referred to as a TRP.

In this case, various wireless resource allocations such as the case 1640 in which frequency and time resources used by a plurality of TRPs for PDSCH transmission are all the same, the case 1645 in which frequency and time resources used by a plurality of TRPs do not overlap at all, and the case 1650 in which some of the frequency and time resources used by a plurality of TRPs overlap each other may be considered.

In order to support NC-JT, DCIs in various forms, structures, and relations may be considered to simultaneously allocate a plurality of PDSCHs to one UE.

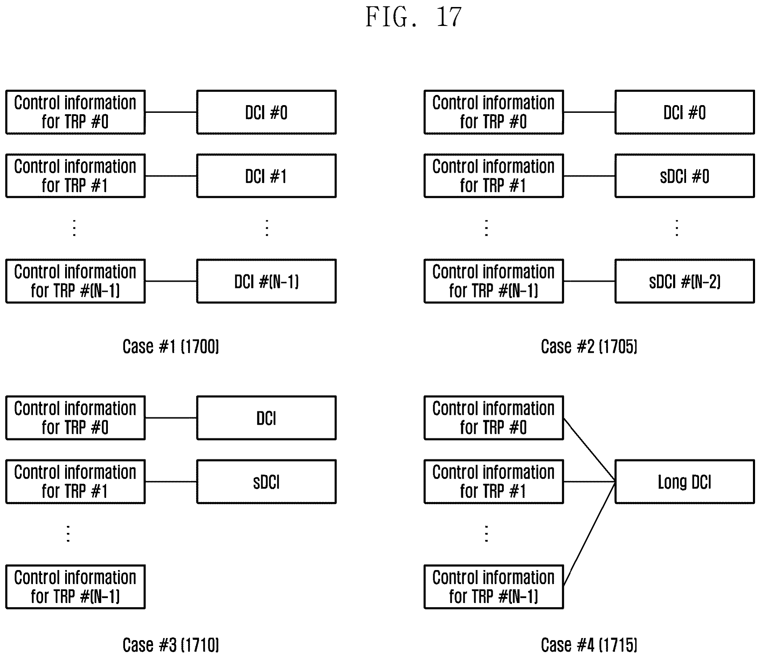

FIG. 17 illustrates an example for a configuration of downlink control information (DCI) for NC-JT in which respective TRPs transmit different PDSCHs or different PDSCH layers to the UE in a wireless communication system according to an embodiment of the disclosure.

Referring to FIG. 17, case #1 1700 is an example in which control information for PDSCHs transmitted from (N-1) additional TRPs is transmitted independently from control information for a PDSCH transmitted from a serving TRP in a situation in which (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP #(N-1)) through independent DCIs (DC1 #0 to DCI #(N-1)). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

Case #2 1705 is an example in which pieces of control information (DCI) for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI #0 that is control information for a PDSCH transmitted from the serving TRP (TRP #0) may include all information elements of DCI format 1_0, DCI format 1_1, and DCI format 1_2, but shortened DCIs (hereinafter, referred to as sDCIs) (sDCI #0 to sDCI #(N-2)) that are control information for PDSCHs transmitted from the cooperative TRPs (TRP #1 to TRP #(N-1)) may include only some of the information elements of DCI format 1_0, DCI format 1_1, and DCI format 1_2. Accordingly, the sDCI for transmitting control information of PDSCHs transmitted from cooperative TPRs has smaller payload compared to the normal DCI (nDCI) for transmitting control information related to the PDSCH transmitted from the serving TRP, and thus can include reserved bits compared to the nDCI.

In case #2 described above, a degree of freedom of each PDSCH control or allocation may be limited according to content of information elements included in the sDC1, but reception capability of the sDCI is better than the nDCI, and thus a probability of the generation of difference between DCI coverages may become lower.

Case #3 1710 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP #0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information such as frequency domain resource assignment and time domain resource assignment of the cooperative TRPs and the MCS. In addition, information that is not included in the sDCI such as a bandwidth part (BWP) indicator and a carrier indicator may follow the DCI (DCI #0, normal DCI, or nDCI) of the serving TRP.

In case #3 1710, a degree of freedom of PDSCH control or allocation may be limited according to content of the information elements included in the sDCI but reception performance of the sDCI can be controlled, and case #3 1130 may have smaller complexity of DCI blind decoding of the UE compared to case #1 1100 or case #2 1105.

Case #4 1715 is an example in which control information for PDSCHs transmitted from (N-1) additional TRPs is transmitted in the DCI (long DCI) that is the same as that of control information for the PDSCH transmitted from the serving TRP in a situation in which different (N-1) PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP # (N-1)) through single DCI. In case #4 1715, complexity of DCI blind decoding of the UE may not be increased, but a degree of freedom of PDSCH control or allocation may be low since the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following description and embodiments, Case #1 1700, case #2 1705, and case #3 1710 in which one or more pieces of DCI (or PDCCHs) are used to support NC-JT may be classified as multiple PDCCH-based NC-JT, and case #4 1715 in which single DCI (or PDCCH) is used to support NC-JT may be classified as single PDCCH-based NC-JT. In multiple PDCCH-based PDSCH transmission, a CORESET for scheduling the DCI of the serving TRP (TRP #0) is separated from CORESETs for scheduling the DCI of cooperative TRPs (TRP #1 to TRP #(N-1)). A method of distinguishing the CORESETs may include a distinguishing method through a higher-layer indicator for each CORESET and a distinguishing method through a beam configuration for each CORESET. Also, in single PDCCH-based NC-JT, single DCI schedules a single PDSCH having a plurality of layers instead of scheduling a plurality of PDSCHs, and the plurality of layers may be transmitted from a plurality of TRPs. In this case, association between a layer and a TRP transmitting the corresponding layer may be indicated through a transmission configuration indicator (TCI) indication for the layer.

According to embodiments of the disclosure, the "cooperative TRP" may be replaced by various terms such as a "cooperative panel" or a "cooperative beam" when actually applied.

According to embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by one expression for convenience of description.

In the disclosure, a radio protocol structure for NC-JT may be used in various ways according to a TRP deployment scenario. For example, if there is a small backhaul delay or no backhaul delay between cooperative TRPs, a method (CA-like method) using a structure based on MAC layer multiplexing is possible in a similar manner to reference numeral S10 of FIG. 7. On the other hand, if a backhaul delay between cooperative TRPs is so large that the backhaul delay cannot be ignored (e.g., when a time of 2 ms or longer is required for exchange of information, such as CSI, scheduling, and HARQ-ACK, between the cooperative TRPs), a method (DC-like method) of securing characteristics robust to a delay by using an independent structure for each TRP starting from the RLC layer is possible in a similar manner to reference numeral S20 of FIG. 7.

The UE supporting C-JT/NC-JT may receive a C-JT/NC-JT-related parameter, setting value, or the like from a higher-layer configuration, and may set an RRC parameter of the UE, based on the parameter, the setting value, or the like. For the higher-layer configuration, the UE may use a UE capability parameter, for example, tci-StatePDSCH. Here, the UE capability parameter, for example, tci-StatePDSCH may define TCI states for PDSCH transmission, the number of TCI states may be configured as 4, 8, 16, 32, 64, and 128 in FR1 and as 64 and 128 in FR2, and a maximum of 8 states which can be indicated by 3 bits of a TCI field of the DCI may be configured through a MAC CE message among the configured numbers. A maximum value 128 refers to a value indicated by maxNumberConfiguredTCI statesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

### [PDSCH: TCI state activation MAC-CE]

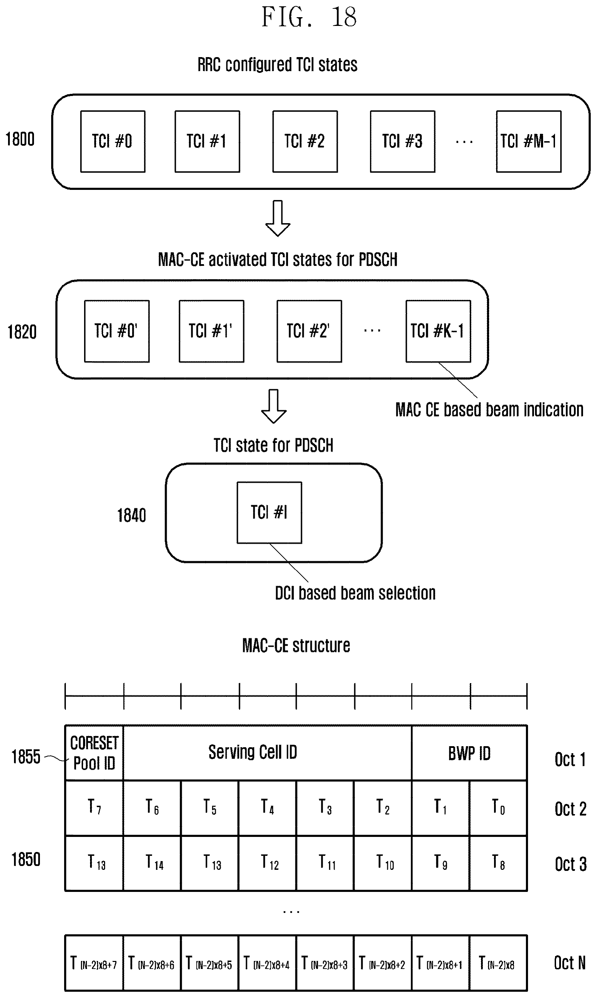

FIG. 18 illustrates an example of a process for beam configuration and activation with regard to a PDSCH. A list of TCI states regarding a PDSCH may be indicated through an upper layer list such as RRC (1800). The list of TCI states may be indicated by tci-StatesToAddModList and/or tci-StatesToReleaseList inside a BWP-specific PDSCH-Config IE, for example. Next, a part of the list of TCI states may be activated through a MAC-CE (1820). Among the TCI states activated through the MAC-CE, a TCI state for the PDSCH may be indicated by DCI (1840). The maximum number of activated TCI states may be determined by the capability reported by the UE. An example of MAC-CE structure for PDSCH TCI state activation/deactivation is illustrated (1850).

The meaning of respective fields inside the MAC CE and values configurable for respective fields are as given in Table 24 below.

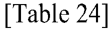

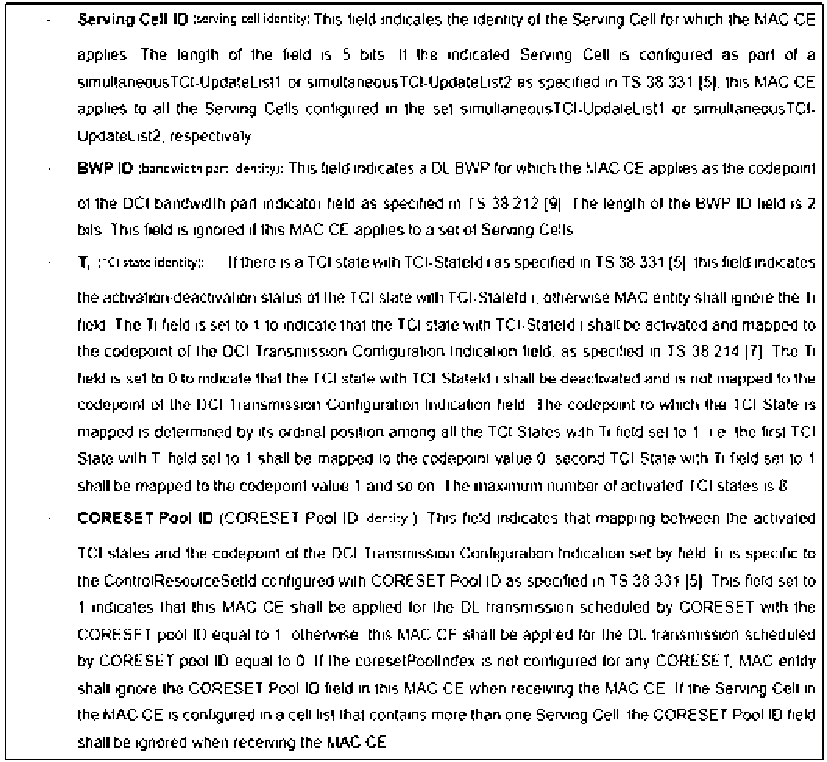

### [Multi-DCI-based Multi-TRP]

As an embodiment of the disclosure, a multi-DCI-based multi-TRP transmission method will be described. According to multi-DCI based multi-TRP transmission method, a downlink control channel for NC-JT may be configured based on multi-PDCCHs.

In NC-JT based on multiple PDCCHs, there may be a CORESET or a search space separated for each TRP when the DCI for scheduling the PDSCH of each TRP is transmitted. The CORESET or search space for each TRP may be configured as at least one of the following cases.
* A configuration of a higher-layer index for each CORESET: CORESET configuration information configured by a higher layer may include an index value, and a TRP for transmitting a PDCCH in the corresponding CORESET may be distinguished by the configured index value for each CORESET. That is, in a set of CORESETs having the same higher-layer index value, it may be considered that the same TRP transmits the PDCCH or that the PDCCH for scheduling the PDSCH of the same TRP is transmitted. The index for each CORESET may be named CORESETPoolIndex, and it may be considered that the PDCCH is transmitted from the same TRP in CORESETs in which the same CORESETPoolIndex value is configured. In the CORESET in which the same CORESETPoolIndex value is not configured, it may be considered that a default value of CORESETPoolIndex is configured, and the default value may be 0.
   ** In the disclosure, when the number of types of CORESETPoolIndex of each of a plurality of CORESETs included in higher-layer signaling PDCCH-Config is larger than 1, that is, when respective CORESETs have different CORESETPoolIndex, the UE may consider that the base station can use a multi-DCI-based multi-TRP transmission method.
   ** Unlike this, in the disclosure, when the number of types of CORESETPoolIndex of each of a plurality of CORESETs included in higher-layer signaling PDCCH-Config is 1, that is, when all CORESETs have the same CORESETPoolIndex of 0 or 1, the UE may consider that the base station performs transmission using a single-TRP instead of using the multi-DCI-based multi-TRP transmission method.
* A configuration of multiple PDCCH-Config: a plurality of PDCCH-Config are configured in one BWP, and each PDCCH-Config may include a PDCCH configuration for each TRP. That is, a list of CORESETs for each TRP and/or a list of search spaces for each TRP may be included in one PDCCH-Config, and it may be considered that one or more CORESETs and one or more search spaces included in one PDCCH-Config correspond to a specific TRP.
* A configuration of a CORESET beam/beam group: a TRP that corresponds to the corresponding CORESET may be distinguished through a beam or a beam group configured for each CORESET. For example, if the same TCI state is configured for multiple CORESETs, it may be considered or determined that the CORESETs are transmitted via the same TRP, or that a PDCCH for scheduling of a PDSCH of the same TRP is transmitted in the corresponding CORESET.
* A configuration of a search space beam/beam group: a beam or a beam group is configured for each search space, and a TRP for each search space may be distinguished therethrough. For example, if the same beam/beam group or TCI state is configured in a plurality of search spaces, the same TRP may transmit the PDCCH in the corresponding search space or a PDCCH for scheduling a PDSCH of the same TRP may be transmitted in the corresponding search space.

As described above, by separating the CORESETs or search spaces for each TRP, it is possible to divide PDSCHs and HARQ-ACK for each TRP and accordingly to generate an independent HARQ-ACK codebook for each TRP and use an independent PUCCH resource.

The configuration may be independent for each cell or each BWP. For example, while two different CORESETPoolIndex values may be configured in PCell, no CORESETPoolIndex value may be configured in a specific SCell. In this case, it may be considered that NC-JT transmission has been configured for the PCell, whereas NC-JT transmission has not been configured for the SCell for which no CORESETPoolIndex value has been configured.

A PDSCH TCI state activation/deactivation MAC-CE which can be applied to the multi-DCI-based multi-TRP transmission method may follow FIG. 18. When the UE does not receive a configuration of CORESETPoolIndex for each of all CORESETs within higher-layer signaling PDCCH-Config, the UE may ignore a CORESET Pool ID field 1855 within a corresponding MAC-CE 1850. When the UE can support the multi-DCI-based multi-TRP transmission method, that is, when respective CORESETs within higher-layer signaling PDCCH-Config have different CORESETPoolIndex, the UE may activate a TCI state within the DCI included in PDCCHs transmitted in CORESETs having a CORESETPoolIndex value which is the same as a value of a CORESET Pool ID field 1855 within the corresponding MAC-CE 1850. For example, when the CORESET Pool ID field 1855 within the corresponding MAC-CE 1850 has a value of 0, a TCI state within the DCI included in PDCCHs transmitted by the CORESETs having CORSETPoolIndex of 0 may follow activation information of the corresponding MAC-CE.

If the UE receives, from the base station, a configuration such that the multi-DCI-based multi-TRP transmission method can be used, that is, the number of types of CORESETPoolIndex of a plurality of CORESETs included in higher-layer signaling PDCCH-Config is larger than 1 or respective CORESETs have different CORESETPoolIndex, the UE is able to know that there are the following restrictions on PDSCHs scheduled by PDCCHs within respective CORESETs having different two CORESETPoolIndex.
1) If PDSCH indicated by PDCCHs within respective CORESETs having different two CORESETPoollndex completely or partially overlap, the UE may apply TCI states indicated by the respective PDCCHs to different CDM groups. That is, two or more TCI states may not be applied to one CDM group
2) If PDSCH indicated by PDCCHs within respective CORESETs having different two CORESETPoolIndex completely or partially overlap, the UE may expect that the numbers of actual front loaded DMRS symbols of respective PDSCHs, the numbers of actual additional DMRS symbols, locations of actual DMRS symbols, and DMRS types are not different.
3) The UE may expect that bandwidth parts indicated by PDCCHs within respective CORESETs having different two CORESETPoolIndexs are the same and subcarrier spacings are also the same.
4) The UE may expect that information on PDSCH scheduled by PDCCHs within respective CORESETs having different two CORESETPoolIndex are completely included in respective PDCCHs.

### [Single-DCI-based multi-TRP]

As an embodiment of the disclosure, a single-DCI-based multi-TRP transmission method is described. The single-DCI-based multi-TRP transmission method may configure a downlink control channel for NC-JT based on a single-PDCCH.

In a single-DCI-based multi-TRP transmission method, a PDSCH transmitted from a plurality of TRPs may be scheduled by one piece of the DCI. Here, as a method of indicating the number of TRPs transmitting the corresponding PDSCHs, the number of TCI states may be used. That is, if the number of TCI states indicated in DCI for scheduling of a PDSCH is two, single-PDCCH-based NC-JT transmission may be considered, and if the number of TCI states is one, single-TRP transmission may be considered. The TCI states indicated by the DCI may correspond to one or two TCI states among TCI states activated by the MAC CE. If the TCI states of the DCI correspond to two TCI states activated by the MAC CE, a TCI codepoint indicated by the DCI is associated with the TCI states activated by the MAC CE, and this may correspond to a case in which the number of TCI states activated by the MAC CE, corresponding to the TCI codepoint, is 2.

As another example, when at least one of all codepoints of the TCI state field within the DCI indicate two TCI states, the UE may consider that the base station can perform transmission based on the single-DCI-based multi-TRP method. In this case, at least one codepoint indicating two TCI states within the TCI state field may be activated through an enhanced PDSCH TCI state activation/deactivation MAC-CE.

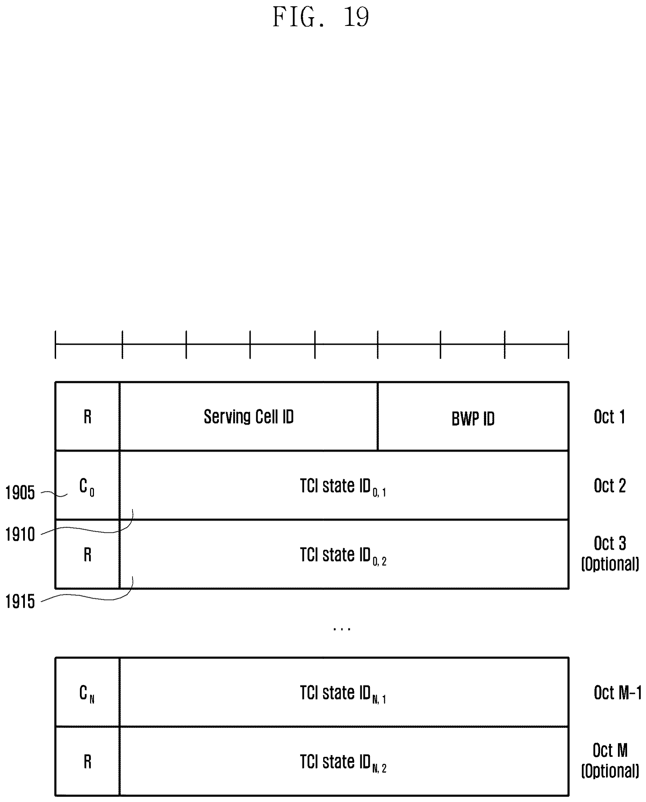

FIG. 19 illustrates an enhanced PDSCH TCI state activation/deactivation MAC-CE structure; The meaning of each field within the MAC CE and a value configurable in each field are as described in Table 25 below.

**[Table 25]**

| |
|---|
| - **Serving Cell ID:** This field indicates the identity of the Serving Cell for which the MAC CE applies. The length of the field is 5 bits. If the indicated Serving Cell is configured as part of a *simultaneous TCI-UpdateList1* or *simultaneousTCI-UpdateList2* as specified in TS 38.331 [5], this MAC CE applies to all the Serving Cells configured in the set *simultaneousTCl-UpdateList1* or *simultaneousTCI-Updatelist2,* respectively; |
| - **BWP ID:** This field indicates a DL BWP for which the MAC CE applies as the codepoint of the DCI bandwidth part indicator field as specified in TS 38.212 [9]. The length of the BWP ID field is 2 bits; |
| - **Cᵢ**: This field indicates whether the octet containing TCI state ID_{i.2} is present. If this field is set to "1", the octet containing TCI state ID_{i.2} is present. If this field is set to "0", the octet containing TCI state ID_{i.2} is not present; |
| - **TCI state ID_{i,j}:** This field indicates the TCI state identified by TCI-Stateld as specified in TS 38.331 [5], where i is the index of the codepoint of the DCI Transmission configuration indication field as specified in TS 38.212 [9] and TCI state ID_{i,j} denotes the j-th TCI state indicated for the i-th codepoint in the DCI Transmission Configuration Indication field. The TCI codepoint to which the TCI States are mapped is determined by its ordinal position among all the TCI codepoints with sets of TCI state ID_{i,j} fields, i.e. the first TCI codepoint with TCI state ID_{0.1} and TCI state ID_{0.2} shall be mapped to the codepoint value 0, the second TCI codepoint with TCI state ID_{1.1} and TCI state ID_{1.2} shall be mapped to the codepoint value 1 and so on. The TCI state ID_{i.2} is optional based on the indication of the Ci field. The maximum number of activated TCI codepoint is 8 and the maximum number of TCI states mapped to a TCI codepoint is 2. |
| - **R**: Reserved bit, set to "0". |

In FIG. 19, when a C0 field 1905 has a value of 1, the corresponding MAC-CE may include a TCI state ID0,2 field 1915 in addition to a TCI state ID0,1 field 1910. This signifies that a TCI state ID0, 1 and a TCI state ID0,2 are activated for a zeroth codepoint of the TCI state field included within the DCI, and when the base station indicates the corresponding codepoint to the UE, the UE may receive an indication of two TCI states. If the C0 field 1905 has a value of 0, the corresponding MAC-CE is unable to include the TCI state ID0,2 field 1915, and this signifies that one TCI state corresponding to the TCI state ID0, 1 is activated for the zeroth codepoint of the TCI state field included in the DCI.

The configuration may be independent for each cell or each BWP. For example, while a maximum number of activated TCI states corresponding to one TCI codepoint is 2 in the PCell, a maximum number of activated TCI states corresponding to one TCI codepoint may be 1 in a specific SCell. In this case, it may be considered that NC-JT may be configured in the PCell but NC-JT may not be configured in the SCell.

### [Method of distinguishing between single-DCI-based multi-TRP PDSCH repetition transmission schemes (TDM/FDM/SDM)]

Next, a method of distinguishing between single-DCI-based multi-TRP PDSCH repetition transmission schemes will be described. The UE may receive an indication of different single-DCI-based multi-TRP PDSCH repeated transmission schemes (for example, TDM, FDM, and SDM) from the base station according to a value indicated by a DCI field and a higher-layer signaling configuration. Table 26 below shows a method of distinguishing single or multi-TRP-based schemes indicated to a UE according to a specific DCI field value and a higher-layer signaling configuration.

**[Table 26]**

| combi nation | no. of IC states | no. of CDM groups | repetitionNumber configuration and indication condition | regarding repetitionScheme configuration | transmission scheme indicated to UI |
|---|---|---|---|---|---|
| 1 | 1 | ≥1 | Condition 2 | No1 configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or no1 configured | Single-TRP TDM scheme 8 |
| 5 | 2 | 2 | Condition 2 | No1 configured | Multi-TRP SDM |
| 6 | 2 | 2 | Condition 3 | No1 configured | Multi-TRP SDM |
| 7 | 2 | 2 | Condition 3 | Configured | Multi-TRP SDM |
| 8 | | 1 | Condition 3 | Configured | Multi-TRP FDM scheme A/FDM scheme B/TDM scheme A |
| 9 | 2 | 1 | Condition 1 | No1 configured | Multi-TRP TDM scheme B |

Each column in Table 26 above may be described as follows.
- Number of TCI states (second column): refers to the number of TCI states indicated by a TCI state field within the DCI, and may be 1 or 2.
- Number of CDM groups (third column): refers to the number of different CDM groups of DRMS ports indicated by an antenna port field within the DCI. The number of CDM groups may be 1, 2, or 3.
- RepetitionNumber configuration and indication condition (fourth column): has three conditions according to whether repetitionNumber for all TDRA entries which can be indicated by a time domain resource allocation field within the DCI is configured and whether an actually indicated TDRA entry has a repetitionNumber configuration.
   * Condition 1: case in which at least one of all TDRA entries which can be indicated by the time domain resource allocation field includes the configuration for repetitionNumber and the TDRA entry indicated by the time domain resource allocation field within the DCI includes the configuration of repetitionNumber larger than 1.
   * Condition 2: case in which at least one of all TDRA entries which can be indicated by the time domain resource allocation field includes the configuration for repetitionNumber and the TDRA entry indicated by the time domain resource allocation field within the DCI does not include the configuration for repetitionNumber.
   * Condition 3: case in which all TDRA entries which can be indicated by the time domain resource allocation field do not include the configuration for repetitionNumber.
- Regarding a repetitionScheme configuration (fifth column): refers to whether repetitionScheme which is higher-layer signaling is configured. RepetitionScheme which is higher-layer signaling may receive a configuration of one of 'tdmSchemeA', and 'fdmSchemeA', 'fdmSchemeB'.
- Transmission scheme indicated to UE (sixth column): refers to single or multiple-TRP schemes indicated according to each combination (first column) expressed by Table 26 above.
   * Single-TRP: refers to single TRP-based PDSCH transmission. If the UE receives a configuration of pdsch-AggegationFactor within higher-layer signaling PDSCH-config, the UE may receive scheduling of single TRP-based PDSCH repeated transmission a number of times received through the configuration. Otherwise, the UE may receive scheduling of single TRP-based PDSCH single transmission.
   * Single-TRP TDM scheme B: refers to time resource division-based PDSCH repeated transmission between single TRP-based slots. The UE repeatedly transmits a PDSCH on a time dimension a number of times corresponding to the number of slots of repetitionNumber larger than 1 configured in the TDRA entry indicated by the time domain resource allocation field according to the above-described condition 1 related to repetitionNumber. In this case, a start symbol and a symbol length of the PDSCH indicated by the TDRA entry is equally applied to every slot corresponding to repetitionNumber and the same TCI state is applied to each PDSCH repeated transmission. The corresponding scheme is similar to a slot aggregation scheme in that the PDSCH repeated transmission between slots is performed in time resources but is different therefrom in that a repeated transmission indication is dynamically determined based on the time domain resource allocation field within the DCI.
   * Multi-TRP SDM: refers to a multi-TRP-based space resource division PDSCH transmission scheme. This is a method of dividing a layer and performing reception from each TRP and may increase reliability of PDSCH transmission in that transmission can be performed at a lowered coding rate through an increase in the number of layers even though it is not the repeated transmission scheme. The UE may receive a PDSCH by applying each of two TCI states indicated through the TCI state field within the DCI to two CDM groups indicated by the base station.
   * Multi-TRP FDM scheme A: refers to a multi-TRP-based frequency resource division PDSCH transmission scheme and is a scheme having one PDSCH transmission occasion and capable of performing transmission with higher reliability by increasing frequency resources and lowering a coding rate even though it is not the repeated transmission such as multi-TRP SDM. Multi-TRP FDM scheme A may apply two TCI states indicated through the TCI state field within the DCI to frequency resources which do not overlap each other. If the PRB bundling size is determined as a wideband and the number of RBs indicated by the frequency domain resource assignment field is N, the UE may receive first ceil (N/2) RBs by applying a first TCI state and receive the remaining floor(N/2) RBs by applying a second TCI state. Here, ceil(.) and floor(.) are operators for rounding up and rounding off the first decimal place. If the PRB bundling size is determined as 2 or 4, even-numbered PRGs are received by applying a first TCI state and odd-numbered PRGs are received by applying a second TCI state.
   * Multi-TRP FDM scheme B: refers to a multi-TRP-based frequency resource division PDSCH repeated transmission scheme and has two PDSCH transmission occasions to repeatedly transmit a PDSCH on each occasion. In the same manner as the multi-TRP FDM scheme A, multi-TRP FDM scheme B may also apply two TCI states indicated through the TCI state field within the DCI to frequency resources which do not overlap each other. If the PRB bundling size is determined as a wideband and the number of RBs indicated by the frequency domain resource assignment field is N, the UE may receive first ceil (N/2) RBs by applying a first TCI state and receive the remaining floor(N/2) RBs by applying a second TCI state. Here, ceil(.) and floor(.) are operators for rounding up and rounding off the first decimal place. If the PRB bundling size is determined as 2 or 4, even-numbered PRGs are received by applying a first TCI state and odd-numbered PRGs are received by applying a second TCI state.
   * Multi-TRP TDM scheme A: refers to a PDSCH repeated transmission scheme within a multi-TRP-based time resource division slot. The UE has two PDSCH transmission occasion within one slot, and a first reception occasion may be determined based on a start symbol and a symbol length of the PDSCH indicated through the time domain resource allocation field within the DCI. A start symbol of a second reception occasion of the PDSCH may be an occasion to which a symbol offset is applied by higher-layer signaling StartingSymbolOffsetK from the last symbol of the first transmission occasion, and the transmission occasion corresponding to the symbol length indicated therefrom may be determined. If higher-layer signaling StartingSymbolOffsetK is not configured, the symbol offset may be considered as 0.
   * Multi-TRP TDM scheme B: refers to a PDSCH repeated transmission scheme between multi-TRP-based time resource division slots. The UE has one PDSCH transmission occasion within one slot and may receive repeated transmission based on a start symbol and a symbol length of the same PDSCH during slots corresponding to repetitionNumber indicated by the time domain resource allocation field within the DCI. If repetitionNumber is 2, the UE may receive PDSCH repeated transmission of first and second slots by applying first and second TCI states, respectively. If repetitionNumber is larger than 2, the UE may use different TCI state application schemes according to configured higher-layer signaling tciMapping. If tciMapping is configured as cyclicMapping, first and second TCI states may be applied to first and second PDSCH transmission occasions, respectively, and the same TCI state application method is equally applied to the remaining PDSCH transmission occasions. If tciMapping is configured as sequenticalMapping, a first TCI state may be applied to first and second PDSCH transmission occasions, a second TCI state may be applied to third and fourth PDSCH transmission occasions, and the same TCI state application method may be equally applied to the remaining PDSCH transmission occasions.

Hereinafter, embodiments of the disclosure will be described in detail in conjunction with the accompanying drawings. The contents of the disclosure may be applied to FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, for the sake of descriptive convenience, a cell, a transmission point, a panel, a beam, and/or a transmission direction which can be distinguished through an upper layer/L1 parameter such as a TCI state or spatial relation information, a cell ID, a TRP ID, or a panel ID may be described as a TRP, a beam, or a TCI state as a whole. Therefore, when actually applied, a TRP, a beam, or a TCI state may be appropriately replaced with one of the above terms.

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description, embodiments of the disclosure will be described in connection with 5G systems by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.
- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.
- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

Hereinafter, the above examples may be described through several embodiments, but they are not independent of each other, and one or more embodiments may be applied simultaneously or in combination.

### <First embodiment: Method for configuring UE capability report and higher layer signaling to support C-JT PDSCH transmission>

As an embodiment of the disclosure, a method for configuring higher layer signaling and L1 signaling for scheduling a coherent joint transmission (C-JT) PDSCH from a base station is described. The C-JT PDSCH is implemented using a method in which a base station transmits a PDSCH to a UE by using multiple TRPs and operating the multiple TRPs as if they were a single TRP, and here, the multiple TRPs may be in a state in which time and frequency synchronization are fully or partially matched. When the base station schedules the C-JT PDSCH for the UE, the UE may secure more ranks than when receiving the PDSCH from a conventional single TRP, and may obtain additional power gain by receiving signals from multiple TRPs. Furthermore, from the perspective of the base station, use of multiple TRPs obtains additional power gain and increases the probability of generating independent channels between multiple UEs compared to using a single TRP, thereby maximizing the gain of multi-user MIMO support.

The UE may report, to the base station, a UE capability indicating that C-JT PDSCH scheduling is possible. The UE capability may include at least one combination of the following:
- The number of TCI states required for C-JT PDSCH scheduling: At least one combination of one, two, or four TCI states may be reported.
- When one TCI states is required for the C-JT PDSCH scheduling, the QCL type of the first TCI state is QCL-TypeA, and four channel parameters including average delay, delay spread, Doppler shift, and Doppler spread may be referred to from a reference RS of the corresponding TCI state.
- When two TCI states are required for C-JT PDSCH scheduling, the UE may report channel parameter information and QCL type included in the first TCI state and the second TCI state, and the channel parameter information and QCL type included in the first TCI state and the second TCI state may be at least one combination of the following details.
   ■ [Method 1 for indicating two TCI states] In both the first and second TCI states, the QCL type is QCL-TypeA, and four channel parameters including average delay, delay spread, Doppler shift, and Doppler spread may be referred to from the reference RS of the two TCI states.
   ■ [Method 2 for indicating two TCI states] The QCL type of the first TCI state is QCL-TypeA, and four channel parameters including average delay, delay spread, Doppler shift, and Doppler spread may be referred to from the reference RS of the first TCI state. The QCL type of the second TCI state may indicate a state in which some channel parameters of the QCL-TypeA are excluded, and two channel parameters including the average delay and delay spread may be referred to from the reference RS of the second TCI state.
   ■ [Method 3 for indicating two TCI states] The QCL type of the first TCI state is QCL-TypeA and four channel parameters including average delay, delay spread, Doppler shift, and Doppler spread may be referred to from the reference RS of the first TCI state, and the QCL type of the second TCI state is QCL-TypeB and two channel parameters including Doppler shift and Doppler spread may be referred to from the reference RS of the second TCI state.
- When four TCI states are required for C-JT PDSCH scheduling, the UE may report channel parameter information and QCL type included in each of the first to fourth TCI states, and the channel parameter information and QCL type included in each of the first to fourth TCI states may be obtained by at least one combination of the following details.
   ■ [Method 1 for indicating four TCI states] All of the QCL types for the first to fourth TCI states are QCL-TypeA, and four channel parameters including average delay, delay spread, Doppler shift, and Doppler spread may be referred to from the reference RS of each of the four TCI states.
   ■ [Method 2 for indicating four TCI states] The QCL type of the first TCI state is QCL-TypeA and four channel parameters including average delay, delay spread, Doppler shift, and Doppler spread may be referred to from the reference RS of the first TCI state, and the QCL type of the second to fourth TCI states may indicate a state in which some channel parameters of the QCL-TypeA are excluded, and two channel parameters including the average delay and delay spread may be referred to from the reference RS of each of the second to fourth TCI states.
   ■ [Method 3 for indicating four TCI states] The QCL type of the first TCI state is QCL-TypeA and four channel parameters including average delay, delay spread, Doppler shift, and Doppler spread may be referred to from the reference RS of the first TCI state, and the QCL type of the second to fourth TCI states is QCL-TypeB and two channel parameters including Doppler shift and Doppler spread may be referred to from the reference RS of each of the second to fourth TCI states.
   ■ [Method 4 for indicating four TCI states] The QCL type of the first and second TCI states is QCL-TypeA and four channel parameters including average delay, delay spread, Doppler shift, and Doppler spread may be referred to from the reference RS of each of the first and second TCI states, and the QCL type of the third and fourth TCI states may indicate a state in which some channel parameters of the QCL-TypeA are excluded and two channel parameters including average delay and delay spread may be referred to from the reference RS of each of the third and fourth TCI states. In this case, the UE may assume that the two channel parameters including Doppler shift and Doppler spread of the first and third TCI states to be used during C-JT PDSCH reception are the same, and may assume that the two channel parameters including Doppler shift and Doppler spread of the second and fourth TCI states are the same.
   ■ [Method 5 for indicating four TCI states] The QCL type of the first and second TCI states is QCL-TypeA and four channel parameters including average delay, delay spread, Doppler shift, and Doppler spread may be referred to from the reference RS of each of the first and second TCI states, and the QCL type of the third and fourth TCI states is QCL-TypeB and two channel parameters including Doppler shift and Doppler spread may be referred to from the reference RS of each of the third and fourth TCI states. In this case, the UE may assume that the two channel parameters including average delay and delay spread of the first and third TCI states to be used during C-JT PDSCH reception are the same, and may assume that the two channel parameters including average delay and delay spread of the second and fourth TCI states are the same.
   ■ In addition, the QCL type of the first TCI state is QCL-TypeA, and four channel parameters including average delay, delay spread, Doppler shift, and Doppler spread may be referred to from the reference RS of the first TCI state. However, the QCL type of the second to fourth TCI states may be QCL-TypeA or may not exclude any other combination that is a type providing only channel parameters corresponding to a subset of the channel parameters provided by the QCL-TypeA.
- The UE may report to the base station whether the UE supports dynamic switching with the multi-TRP transmission scheme (e.g., single-TRP, single-TRP TDM scheme B, multi-TRP SDM, multi-TRP FDM scheme A, multi-TRP FDM scheme B, multi-TRP TDM scheme A, and multi-TRP TDM scheme B).

After receiving the UE capability report, the base station may configure higher layer signaling for the UE by using at least one combination of the following higher layer signaling configuration methods.
- The UE may receive a configuration indicating that the C-JT PDSCH scheduling is possible from the base station through higher layer signaling. The higher layer signaling may be a bandwidth part-specific configuration or a cell-specific configuration.
- In case that the UE reports only one of one, two, or four TCI states that can be received during C-JT PDSCH scheduling through the UE capability report, the base station may use one of the number of TCI states reported by the UE for C-JT PDSCH scheduling, and may not separately configure for the UE the number of TCI states to be used during C-JT PDSCH scheduling through the higher layer signaling.
- In case that the UE reports at least two of one, two, or four TCI states that can be received during the C-JT PDSCH scheduling through the UE capability report, the base station may select one from among at least two of the number of TCI states reported by the UE and notify the UE of the same, and here, the UE may receive a configuration indicating the number of TCI states to be used during the C-JT PDSCH scheduling from the base station through higher layer signaling.
- In case that the UE reports at least one of the number of TCI states that can be received during the C-JT PDSCH scheduling through the UE capability report, the base station may select one of the TCI states reported by the UE and notify the UE of the same, and here, the UE may receive a configuration indicating the number of TCI states to be used during the C-JT PDSCH scheduling from the base station through higher layer signaling.
- In case that the UE reports the number of TCI states that can be received during the C-JT PDSCH scheduling through the UE capability report, and the report includes at least one combination of two or four TCI states, the UE may receive, from the base station through higher layer signaling, a configuration of channel parameters to be used or omitted among all channel parameters that can be included in a specific QCL type or the QCL type of each TCI state among multiple TCI states to be used during C-JT PDSCH scheduling (e.g., in the case of QCL-TypeA, four channel parameters including average delay, delay spread, Doppler shift, and Doppler spread can be included).
- In case that the UE reports the number of TCI states that can be received during the C-JT PDSCH scheduling through the UE capability report, and the report includes at least one combination of two or four TCI states, the UE may receive from the base station one of the [Method 1 for indicating two TCI states] to [Method 3 for indicating two TCI states], or one of the [Method 1 for indicating four TCI states] to [Method 5 for indicating four TCI states], through higher layer signaling.
- In case that information indicating that two TCI states are required is included and reported when the UE reports the number of receivable TCI states through the UE capability report during C-JT PDSCH scheduling, the UE may receive the C-JT PDSCH scheduling by assuming one of the [Method 1 for indicating two TCI states] to [Method 3 for indicating two TCI states] without a specific higher layer signaling configured from the base station.
- In case that information indicating that four TCI states are required is included and reported when the UE reports the number of receivable TCI states is reported through the UE capability report during C-JT PDSCH scheduling, the UE may receive the C-JT PDSCH scheduling by assuming one of the [Method 1 for indicating four TCI states] to [Method 5 for indicating four TCI states] without a specific higher layer signaling configured from the base station.
- In case that the UE has reported to the base station through the UE capability report that it is capable of supporting dynamic switching with a specific multi-TRP transmission scheme, the base station may provide a configuration to the UE through higher layer signaling that it is capable of performing dynamic switching between the specific multi-TRP transmission scheme and C-JT PDSCH transmission, if this is a method supported by the base station.
- In case that the UE has reported to the base station through the UE capability report that it is capable of supporting both transmission schemes of the SFN PDSCH and C-JT PDSCH, the UE may receive a configuration relating to one of the SFN PDSCH or C-JT PDSCH scheme from the base station through higher layer signaling. In other words, the UE may not support dynamic switching between the SFN PDSCH and the C-JT PDSCH. In this case, the corresponding higher layer signaling received from the base station by the UE may be a bandwidth-specific configuration or a cell-specific configuration.
- In case that the UE has reported to the base station through the UE capability report that it is capable of supporting all four transmission schemes of multi-TRP FDM scheme A, multi-TRP FDM scheme B, multi-TRP TDM scheme A, and C-JT PDSCH, the UE may receive a configuration relating to one of multi-TRP FDM scheme A, multi-TRP FDM scheme B, multi-TRP TDM scheme A, and C-JT PDSCH from the base station through higher layer signaling. In other words, the UE may not support dynamic switching among the multi-TRP FDM scheme A, multi-TRP FDM scheme B, multi-TRP TDM scheme A, and C-JT PDSCH. In this case, the corresponding higher layer signaling received from the base station by the UE may be a bandwidth-part-specific configuration or a cell-specific configuration.
- In case that the UE has reported to the base station through the UE capability report that it is capable of supporting both transmission schemes of multi-TRP SDM and C-JT PDSCH, the UE may receive a configuration of higher layer signaling indicating support for the C-JT PDSCH from the base station, or may receive scheduling of multi-TRP SDM without receiving the higher layer signaling. In other words, the UE may not support dynamic switching between the multi-TRP SDM method and the C-JT PDSCH. In this case, the higher layer signaling received from the base station by the UE may be a bandwidth-specific configuration or a cell-specific configuration.
- In case that the UE reports at least one TCI states receivable during the C-JT PDSCH scheduling through the UE capability report, the base station may notify the UE of at least two of the numbers of TCI states reported by the UE. Here, the UE may receive from the base station at least two of the numbers of TCI states to be used during the C-JT PDSCH scheduling through higher layer signaling, and may receive scheduling of the C-JT PDSCH by using different numbers of TCI states. For example, if the UE has received, from the base station, a configuration indicating one and two of TCI states to be used during the C-JT PDSCH scheduling, the UE may use a code point including one TCI state or a code point including two TCI states during the C-JT PDSCH scheduling from the base station. Here, the use of one TCI state may correspond to a case in which all of the multiple TRPs (e.g., TRP1 and TRP2) used for the C-JT PDSCH scheduling are well-synchronized in time and frequency, while the use of two TCI states may correspond to a case in which at least one of the time or frequency synchronization is not matched for multiple TRPs (e.g., TRP1 and TRP3) used for the C-JT PDSCH scheduling. As described above, depending on a combination of TRPs among the multiple TRPs to be used to perform C-JT PDSCH scheduling, the UE may receive the C-JT PDSCH scheduling information using different quantities of TCI states from the base station.

### <Second embodiment: UE and base station operations during reception of C-JT PDSCH scheduling>

As an embodiment of the disclosure, operations of a base station and a UE when the UE receives the C-JT PDSCH scheduling from the base station are described. This embodiment may operate in conjunction with the details of the first embodiment. In other words, this embodiment may be an operation connected from the UE capability report for C-JT PDSCH support and higher layer signaling configuration scheme from the base station for C-JT PDSCH support mentioned in the first embodiment.

When UE has received a configuration of higher layer signaling relating to the unified TCI state from the base station, the UE may receive a PDCCH from the base station and receive an indication of one or more unified TCI states through the TCI state field within the corresponding PDCCH. Here, when the indicated one or more unified TCI states are different from the unified TCI state received before the corresponding PDCCH is received, the UE may apply the indicated one or more unified TCI states from the first slot after the beam application time from the last symbol for the reception of the corresponding PDCCH, and the indicated one or more unified TCI states may be used before the first slot after the beam application time after the UE has received a new TCI state indication.

During the time when the indicated one or more unified TCI states are usable, the UE may determine a TCI state to be used for application to a PDSCH scheduled through the PDCCH from among the indicated one or more unified TCI states by means of the TCI state selection field in the PDCCH.

C-JT PDSCH scheduling may be notified to a UE by combining at least one piece of information indicated by the following fields in the DCI.
- TCI state field: if the UE has received a configuration of higher layer signaling relating to the unified TCI state from the base station, the UE may receive a PDCCH from the base station and receive an indication of one or more unified TCI states in the TCI state field within the PDCCH. Here, if the indicated one or more unified TCI states are different from the unified TCI state received before the corresponding PDCCH is received, the UE may apply the indicated one or more unified TCI states from the first slot after the beam application time from the last symbol for the reception of the corresponding PDCCH, and the indicated one or more unified TCI states may be used before the first slot after the beam application time after the UE has received a new TCI state indication.
- TCI state selection field: During the time when one or more unified TCI states indicated through the TCI state field is usable, the UE may determine a TCI state to be used for application to a PDSCH scheduled through the PDCCH from among the indicated one or more unified TCI states by means of the TCI state selection field in the PDCCH. The TCI state selection field may be defined by two bits and may include four code points. When the UE has received an indication of two TCI states, the first code point of the TCI state selection field may indicate that the PDSCH is to be received using the first TCI state among the two TCI states, the second code point may indicate that the PDSCH is to be received using the second TCI state among the two TCI states, the third code point may indicate that the PDSCH is to be received using both TCI states, and the fourth code point may indicate that another PDSCH is to be received using both TCI states or may be reserved. The order of the first to fourth code points is exemplary, and it is not excluded that the order may be changed. For example, the first code point may indicate that the PDSCH is to be received using both TCI states, the second code point may indicate that the PDSCH is to be received using the first TCI state, the third code point may indicate that another PDSCH is to be received using both TCI states or may be reserved, and the fourth code point may indicate that the PDSCH is to be received using the second TCI state among the two TCI states.
- Antenna port field: The UE may receive information about a DMRS port to be used for reception of the PDSCH from the base station through the corresponding antenna port field. Here, the UE may receive information about the number of CDM groups, the number of DMRS ports, etc., through the corresponding antenna port field. If the UE receives the C-JT PDSCH scheduling from the base station, the number of CDM groups may not be restricted (e.g., one, two, or three may be possible).
- New field related to TCI state use scheme during C-JT PDSCH reception: when the UE receives higher layer signaling configured from the base station, the higher layer signaling indicating that it is capable of supporting the C-JT PDSCH, the UE may assume that the new field exists in the DCI, and the UE may receive an indication of a channel parameter to be used at the time of applying each TCI state to the PDSCH DMRS upon receiving the C-JT PDSCH through multiple TCI states by means of the new field. For example, the new field may be one bit or two bits, and if the new field is one bit, the UE may receive an indication of a scheme of using two different channel parameters through two code points, and in case that the C-JT PDSCH is received using two TCI states, the base station may select a maximum of two among [Method 1 for indicating two TCI states] to [Method 3 for indicating two TCI states] and map them to each code point of the new field. In case that the new field is two bits, the UE may receive an indication of a scheme of using four different channel parameters through four code points, if the C-JT PDSCH is received using two TCI states, the base station may select three among the [Method 1 for indicating two TCI states] to [Method 3 for indicating two TCI states] and map them to each code point of the new field, and if the C-JT PDSCH is received using four TCI states, the base station may select a maximum of four among the five methods of [Method 1 for indicating four TCI states] to [Method 5 for indicating four TCI states] and map them to each code point of the new field.

In case that the UE has received higher layer signaling configured from the base station, the higher layer signaling indicating that one TCI state is used during the C-JT PDSCH scheduling as described above, when the UE has received a PDCCH including C-JT PDSCH scheduling information from the base station, the TCI state selection field in the corresponding PDCCH may include the first or second code point. In this case, although the UE receives the C-JT PDSCH scheduling from the base station, since the time and frequency synchronization between multiple TRPs is fully matched, the C-JT PDSCH scheduling may be possible even with one TCI state indication, and therefore, although the base station may transmit the C-JT PDSCH using multiple TRPs, the C-JT PDSCH and the PDSCH actually transmitted from a single TRP may both be regarded as PDSCHs transmitted from a single TRP from the UE's perspective, and these two PDSCH scheduling may not be distinguished. Therefore, when the C-JT PDSCH is received from the base station, the UE may apply one TCI state to the PDSCH DMRS in the same manner as receiving the PDSCH from a conventional single TRP. In other words, from the UE's perspective, it may be impossible to distinguish between receiving the C-JT PDSCH and receiving the PDSCH from a single TRP when the C-JT PDSCH scheduling is performed using one TCI state.

In case that the UE has received higher layer signaling configured from the base station, the higher layer signaling indicating that one TCI state is used during the C-JT PDSCH scheduling as described above, the UE may be notified by the base station that one or more specific TCI states among all TCI states correspond to the C-JT PDSCH scheduling. The UE may assume that the base station configures a value for a TCI state index for the C-JT PDSCH scheduling by a specific higher layer signaling, or that there may be a rule as to whether a TCI state of a specific index (e.g., TCI state index 0 or 1, ..., or other specific index) is used as a TCI state index for the C-JT PDSCH scheduling, and thus the base station configures the TCI state of the specific index for the UE as the TCI state for the C-JT PDSCH scheduling. In case that the UE recognizes information about one TCI state to be used for the C-JT PDSCH scheduling from the base station by using the method above, and that one corresponding TCI state to be used for the C-JT PDSCH scheduling is included in the multiple unified TCI states indicated to the UE from the base station, the UE may expect that the third code point is not to be indicated through the TCI state selection field. In other words, the UE may not expect that the one TCI state to be used for the C-JT PDSCH scheduling from the base station is to be used for selection of multiple TCI states together with other TCI states through the TCI state selection field.

In case that the UE has received higher layer signaling configured from the base station, the higher layer signaling indicating that two TCI states are used during the C-JT PDSCH scheduling as described above, and has received an indication of multiple unified TCI states, the UE may receive an indication to apply two TCI states among the multiple unified TCI states indicated by the base station at the time of receiving a PDSCH scheduled from the base station through the TCI state selection field as follows.
- For example, in the indication received by the UE, the TCI state selection field may be configured by two bits, the first and second code points may indicate single-TRP-based PDSCH reception to which the first and second TCI states are applied, respectively, the third code point may indicate a multi-TRP PDSCH reception scheme employing both the first and second TCI states (e.g., one of the multi-TRP SDM, multi-TRP FDM scheme A, multi-TRP FDM scheme B, and multi-TRP TDM scheme A, other than the C-JT PDSCH scheme), and the fourth code point of the TCI state selection field may indicate the C-JT PDSCH reception. In this case, the UE may assume that dynamic switching between the multi-TRP PDSCH reception scheme (e.g., one of the multi-TRP SDM, multi-TRP FDM scheme A, multi-TRP FDM scheme B, and multi-TRP TDM scheme A) and the C-JT PDSCH scheme is possible, and may be in a state of being configured with the higher layer signaling related thereto from the base station. The UE applies two TCI states when receiving the PDSCH, regardless of whether the UE receives an indication of the third code point or the fourth code point from the base station. However, depending on whether the third or fourth code point is indicated, the UE may perform different operations regarding whether to apply some or all of the channel parameters indicated for each TCI state. In case that the UE has received an indication of the third code point from the base station, the UE may apply all channel parameters provided by the QCL types included in the two TCI states to be applied during PDSCH reception (e.g., if the UE receives a multi-TRP SDM-based PDSCH, as described above, the UE may apply all channel parameters provided by the QCL type included in the first TCI state to the DMRS port within the first CDM group indicated by the base station, and may apply all channel parameters provided by the QCL type included in the second TCI state to the DMRS port within the second CDM group indicated by the base station). Further, in case that the UE has received an indication of the fourth code point from the base station, the UE may apply some or all of the channel parameters provided by the QCL types indicated by the two TCI states to be applied during PDSCH reception according to the higher layer signaling configured from the base station or a scheme fixedly defined in the standard, and when some of the channel parameters are applied, a channel parameter to be applied and a parameter to be excluded will be described below.
- As another example, in the indication received by the UE, the TCI state selection field may be configured by two bits, the first and second code points may indicate single-TRP-based PDSCH reception to which the first and second TCI states are applied, respectively, the third code point may indicate C-JT PDSCH reception to which both the first and second TCI states are applied, and the fourth code point may be reserved. In this case, the UE may assume that dynamic switching between a multi-TRP PDSCH reception scheme (e.g., one of the multi-TRP SDM, multi-TRP FDM scheme A, multi-TRP FDM scheme B, multi-TRP TDM scheme A) and the C-JT PDSCH scheme is impossible, and may be in a state in which the higher layer signaling related thereto is configured or not from the base station.
- As yet another example, in the indication received by the UE, the TCI state selection field may be configured by two bits, and the first and second code points may indicate single-TRP-based PDSCH reception to which the first and second TCI states are applied, respectively, the third code point may indicate one TCI state application scheme for C-JT PDSCH reception, and the fourth code point may indicate another TCI state application scheme for C-JT PDSCH reception. In other words, the UE may have different TCI state application schemes during C-JT PDSCH reception depending on a code point of the TCI state selection field indicated from the base station. Various TCI state application schemes during C-JT PDSCH reception in the UE will be described below, and at least two of the schemes described below may be mapped to the third and fourth code points, respectively.

As still another example, in the indication received by the UE, the TCI state selection field may be configured by one bit, the first code point may indicate single-TRP-based PDSCH reception to which the first or second TCI state are applied, and the second code point may indicate C-JT PDSCH reception to which both the first and second TCI states are applied. In this case, the UE may assume that dynamic switching between a multi-TRP PDSCH reception scheme (e.g., one of the multi-TRP SDM, multi-TRP FDM scheme A, multi-TRP FDM scheme B, and multi-TRP TDM scheme A) and the C-JT PDSCH scheme is impossible, and may be in a state in which the higher layer signaling related thereto is configured or not from the base station.

When the UE applies two TCI states when receiving the C-JT PDSCH from the base station, the UE may determine a channel parameter to apply, from each of the two TCI states, based on the higher layer signaling configuration regarding which combination of TCI states to be used use, as described above.
- For example, if the UE has been configured with [Method 1 for indicating two TCI states] among [Method 1 for indicating two TCI states] to [Method 3 for indicating two TCI states] through the higher layer signaling, the UE may receive all PDSCH DMRSs when the corresponding two TCI states are assumed. Here, the QCL type of both TCI states is QCL-TypeA, and four channel parameters including average delay, delay spread, Doppler shift, and Doppler spread may be referred to from the reference RS of the first and second TCI states.
- As another example, if the UE has been configured with [Method 2 for indicating two TCI states] among [Method 1 for indicating two TCI states] to [Method 3 for indicating two TCI states] through higher layer signaling, the UE may receive all PDSCH DMRSs when the corresponding two TCI states are assumed. Here, when the QCL type of the first TCI state among the two TCI states is QCL-TypeA, and four channel parameters including average delay, delay spread, Doppler shift, and Doppler spread may be referred to from the reference RS of the first TCI state. Further, the QCL type of the second TCI state may indicate a state in which some channel parameters of the QCL-TypeA are excluded, and two channel parameters including average delay and delay spread may be referred to from the reference RS of the second TCI state. In another method, the UE may regard the QCL type of the first and second TCI states as QCL-TypeA, and may receive the PDSCH DMRSs from the reference RS of the first and second TCI states by referring to all four channel parameters of the first TCI state, including average delay, delay spread, Doppler shift, and Doppler spread, and by referring to the average delay and delay spread excluding the Doppler shift and the Doppler spread among the four channel parameters of the second TCI state.
- As yet another example, if the UE has been configured with [Method 3 for indicating two TCI states] among [Method 1 for indicating two TCI states] to [Method 3 for indicating two TCI states] through higher layer signaling, the UE may receive all PDSCH DMRSs when the corresponding two TCI states are assumed. Here, the QCL type of the first TCI state among the two TCI states is QCL-TypeA and four channel parameters including average delay, delay spread, Doppler shift, and Doppler spread may be referred to from the reference RS of the first TCI state, and the QCL type of the second TCI state is QCL-TypeB and two channel parameters including Doppler shift and Doppler spread may be referred to from the reference RS of the second TCI state. In another method, the UE may regard the QCL type of the first and second TCI states as QCL-TypeA, and may receive the PDSCH DMRSs from the reference RS of the first and second TCI states by referring to all four channel parameters of the first TCI state, including average delay, delay spread, Doppler shift, and Doppler spread, and by referring to the average delay and delay spread excluding the Doppler shift and the Doppler spread among the four channel parameters of the second TCI state.

In case that the UE has received higher layer signaling configured from the base station, the higher layer signaling indicating that four TCI states are used for the C-JT PDSCH scheduling as described above, the UE may assume at least one combination of the following for the number of TCI states indicated through the TCI state field in the DCI transmitted from the base station.
- The UE may consider a maximum of two TCI states indicated through the TCI state field. In other words, the UE may consider the number of TCI states indicated by each code point in the TCI state field as either one or two. The UE may additionally receive a configuration of one to three TCI states connected by higher layer signaling from the base station for the TCI state of a specific index. If the UE has been indicated by the base station for the TCI state of the specific index through the TCI state field, and has been indicated by the base station to select a TCI state combination for C-JT PDSCH reception through the TCI state selection field, the UE may additionally apply the TCI state of the indicated specific index and one or two TCI states connected by higher layer signaling with the TCI state of the specific index, and this may be possible without an L1 signaling-based indication from the base station for the connected one to three TCI states. Here, if the UE has been indicated by the base station through the TCI state field for the TCI state of the specific index, and has been indicated by the base station through the TCI state selection field to select a TCI state combination for a PDSCH reception scheme other than C-JT PDSCH reception, the UE may perform PDSCH reception by applying only the specific TCI state combination indicated through the TCI state selection field among the TCI states of the indicated specific index, and may not apply one or two TCI states connected by higher layer signaling with to the TCI state of the specific index. In other words, the TCI state of the specific index and one or two TCI states connected by the higher layer signaling may be used only for C-JT PDSCH reception. For example, if the UE may receive an indication of a first TCI state to an eighth TCI state from the base station by using each of eight code points in the TCI state field, wherein the first TCI state is connected to a ninth to eleventh TCI states through the higher layer signaling, and the UE has received an indication of a code point indicating the first TCI state through the TCI state field and has received an indication of TCI state selection for C-JT PDSCH reception through the TCI state selection field, the UE may apply four TCI states including the ninth to eleventh TCI states, in addition to the first TCI state, to PDSCH reception.
- The UE may consider a maximum of four TCI states indicated through the TCI state field. In other words, the UE may consider some or all of the number of TCI states indicated by each code point in the TCI state field as one to four (e.g., all of one, two, three, and four TCI state indications are possible, or only one, two, and four TCI state indications are possible, while three TCI state indication is not possible). In case that the UE indicates three or four TCI states from the base station through the TCI state field, i.e., indicates more than one or two TCI states, the UE may receive an indication to apply some or all of the indicated TCI states to PDSCH reception through the TCI state selection field in the DCI, and here, three or four TCI states may be used only for C-JT PDSCH reception. For example, in case that the UE has received an indication of four TCI states through the TCI state field and has received an indication of a single-TRP-based PDSCH using the first TCI state through the TCI state selection field, the UE may receive the single-TRP-based PDSCH by applying the first TCI state among the four TCI states through the TCI state field from the base station. As another example, if the UE has received an indication of four TCI states through the TCI state field and has received the C-JT PDSCH through the TCI state selection field, the UE may receive the C-JT PDSCH by applying more than two TCI states among the four TCI states through the TCI state field from the base station, and a combination of TCI states among the four TCI states, which is used to receive the C-JT PDSCH may differ depending on the definition of each code point in the TCI state selection field.

Through the TCI state selection field, the UE may receive four TCI state indications from the base station at the time of receiving a PDSCH scheduled from the base station through the TCI state selection field as follows.
- For example, in the indication received by the UE, the TCI state selection field may be configured by two bits, the first and second code points may indicate single-TRP-based PDSCH reception to which the first and second TCI states are applied, respectively, the third code point may indicate a multi-TRP PDSCH reception scheme employing both the first and second TCI states (e.g., one of the multi-TRP SDM, multi-TRP FDM scheme A, multi-TRP FDM scheme B, and multi-TRP TDM scheme A, other than the C-JT PDSCH scheme), and the fourth code point of the TCI state selection field may indicate the C-JT PDSCH reception to which three or four of the first to fourth TCI states are applied. In this case, the UE may assume that dynamic switching between the multi-TRP PDSCH reception scheme (e.g., one of the multi-TRP SDM, multi-TRP FDM scheme A, multi-TRP FDM scheme B, and multi-TRP TDM scheme A) and the C-JT PDSCH scheme is possible, and may be in a state of being configured with the higher layer signaling related thereto from the base station.
- As another example, in the indication received by the UE, the TCI state selection field may be configured by two bits, the first and second code points among the indicated four TCI states may indicate single-TRP-based PDSCH reception to which the first and second TCI states are applied, respectively, the third code point may indicate C-JT PDSCH reception to which three or all four of the first to fourth TCI states are applied, and the fourth code point may be reserved. In this case, the UE may assume that dynamic switching between a multi-TRP PDSCH reception scheme (e.g., one of the multi-TRP SDM, multi-TRP FDM scheme A, multi-TRP FDM scheme B, multi-TRP TDM scheme A) and the C-JT PDSCH scheme is impossible, and may be in a state in which the higher layer signaling related thereto is configured or not from the base station.
- As another example, in the indication received by the UE, the TCI state selection field may be configured by two bits, the first and second code points may indicate single-TRP-based PDSCH reception to which the first and second TCI states among the indicated four TCI states are applied, respectively, the third code point may indicate one TCI state application scheme for C-JT PDSCH reception among the indicated four TCI states, and the fourth code point may indicate another TCI state application scheme for C-JT PDSCH reception. In other words, the UE may have different TCI state application schemes during C-JT PDSCH reception depending on a code point of the TCI state selection field indicated by the base station. Various TCI state application schemes during C-JT PDSCH reception in the UE will be described below, and at least two of the schemes described below may be mapped to the third and fourth code points, respectively.
- As another example, in the indication received by the UE, the TCI state selection field may be configured by one bit, the first code point may indicate single-TRP-based PDSCH reception to which the first or second TCI states among the indicated four TCI states are applied, and the second code point may indicate C-JT PDSCH reception to which three or all four among the first to fourth TCI states are applied. In this case, the UE may assume that dynamic switching between a multi-TRP PDSCH reception scheme (e.g., one of the multi-TRP SDM, multi-TRP FDM scheme A, multi-TRP FDM scheme B, and multi-TRP TDM scheme A) and the C-JT PDSCH scheme is impossible, and may be in a state in which the higher layer signaling related thereto is configured or not from the base station.
- As another example, in the indication received by the UE, the TCI state selection field may be configured by three bits, the first and second code points may each indicate single-TRP-based PDSCH reception to which the first and second TCI states among the indicated four TCI states are applied, and the third to eighth code points may each indicate a specific one of a multi-TRP PDSCH reception scheme and C-JT PDSCH reception scheme. In the case of C-JT PDSCH reception, a reception method of applying two, three, or four of the indicated four TCI states may be used for each code point. For example, the third code point may indicate a multi-TRP PDSCH reception scheme employing two of the first and second TCI states among the four TCI states (e.g., one of the multi-TRP SDM, multi-TRP FDM scheme A, multi-TRP FDM scheme B, multi-TRP TDM scheme A, other than the C-JT PDSCH scheme), the fourth code point may indicate a C-JT PDSCH reception scheme employing two of the first and second TCI states among the four TCI states, the fifth code point may indicate another C-JT PDSCH reception scheme employing two of the first and second TCI states among the four TCI states, the sixth code point may indicate a C-JT PDSCH reception scheme employing all of the four TCI states, and the seventh code point may indicate another C-JT PDSCH reception scheme employing all of the four TCI states. This is only an example, and unlike the above example, only code point denoting each C-JT PDSCH reception scheme may exist within the third to eighth code points, and no code point denoting a multi-TRP PDSCH reception method may exist. Unlike the above example, only C-JT PDSCH reception schemes of applying two or four TCI states may be mapped to the third to eighth code points.

In case that four TCI states are applied when receiving the C-JT PDSCH from the base station, the UE may determine a channel parameter to be applied, from each TCI state among the four TCI states, as follows, based on the higher layer signaling configuration regarding a combination of TCI states to be used as described above.
- For example, if the UE has been configured with [Method 1 for indicating four TCI states] among [Method 1 for indicating four TCI states] to [Method 5 for indicating four TCI states] through higher layer signaling, the UE may receive all PDSCH DMRSs when the corresponding four TCI states are assumed. Here, the QCL type of all four TCI states is QCL-TypeA and four channel parameters including average delay, delay spread, Doppler shift, and Doppler spread may be referred to from the reference RS of the first to fourth TCI states.
- As another example, if the UE has been configured with [Method 2 for indicating four TCI states] among [Method 1 for indicating four TCI states] to [Method 5 for indicating four TCI states] through higher layer signaling, the UE may receive all PDSCH DMRSs when the corresponding four TCI states are assumed. Here, the QCL type of the first TCI state among the four TCI states is QCL-TypeA and four channel parameters including average delay, delay spread, Doppler shift, and Doppler spread may be referred to from the reference RS of the first TCI state, and the QCL type of the second to fourth TCI states may indicate a state in which some channel parameters of the QCL-TypeA are excluded and two channel parameters including average delay and delay spread may be referred to from the reference RS of each of the second to fourth TCI states. In another method, the UE may regard all QCL types of the first to second TCI states as QCL-TypeA, and may receive the PDSCH DMRSs by referring to all four channel parameters including average delay, delay spread, Doppler shift, and Doppler spread of the first TCI state from the reference RS of the first to fourth TCI states, and by referring to the average delay and delay spread excluding the Doppler shift and the Doppler spread from among the four channel parameters of each of the second to fourth TCI states.
- As another example, if the UE has been configured with [Method 4 for indicating four TCI states] among [Method 1 for indicating four TCI states] to [Method 5 for indicating four TCI states] through higher layer signaling, the UE may receive all PDSCH DMRSs when the corresponding two TCI states are assumed. Here, the QCL type of the first and second TCI states among the four TCI states is QCL-TypeA and four channel parameters including average delay, delay spread, Doppler shift, and Doppler spread may be referred to from the reference RS of each of the first and second TCI states, and the QCL type of the third and fourth TCI states may indicate a state in which some channel parameters of the QCL-TypeA are excluded, and two channel parameters including average delay and delay spread may be referred to from the reference RS of each of the third and fourth TCI states. In another method, the UE may regard the QCL type of the first to fourth TCI states as QCL-TypeA, and may receive the PDSCH DMRSs by referring to all four channel parameters including average delay, delay spread, Doppler shift, and Doppler spread from the reference RS of the first to fourth TCI states, in the case of each of the first and second TCI states, and by referring to the average delay and delay spread excluding the Doppler shift and the Doppler spread from the four channel parameters in the case of each of the third and fourth TCI states. In this case, the UE may assume that the two channel parameters including Doppler shift and Doppler spread of the first and third TCI states to be used during C-JT PDSCH reception are the same, and may assume that the two channel parameters including Doppler shift and Doppler spread of the second and fourth TCI states are the same.

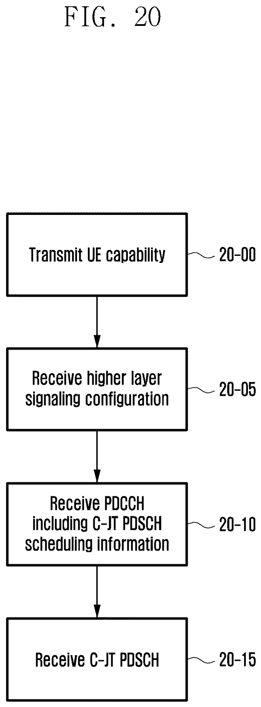

FIG. 20 illustrates an operation of a UE for the C-JT PDSCH scheduling according to an embodiment of the disclosure.

The UE may transmit a UE capability report to a base station (operation 20-00). Here, the UE capability report transmitted by the UE may include a UE capability report for C-JT PDSCH support mentioned in the first embodiment.

The UE may receive a higher layer signaling configuration from the base station according to the UE capability report (operation 20-05). Here, the higher layer signaling that may be received from the base station may include the higher layer signaling for C-JT PDSCH support mentioned in the first embodiment.

The UE may receive a PDCCH including C-JT PDSCH scheduling information from the base station (operation 20-10). Here, the UE may assume the number of TCI states to be applied during reception of the C-JT PDSCH and a channel parameter to be applied to each TCI state, based on a combination of information indicated by the higher layer signaling received from the base station by the UE, a TCI state field in DCI, and a TCI state selection field in the DCI.

The UE may receive a C-JT PDSCH from the base station, based on C-JT PDSCH scheduling information included in the PDCCH (operation 20-15). Here, the UE may apply, to all DMRSs of the corresponding C-JT PDSCH, the channel parameters included in one or more TCI states indicated through the TCI state field included in the PDCCH, or included in one or more TCI states selected from among the indicated multiple TCI states through a new field used for selecting a TCI state to be applied to the PDSCH reception scheduled by the PDCCH.

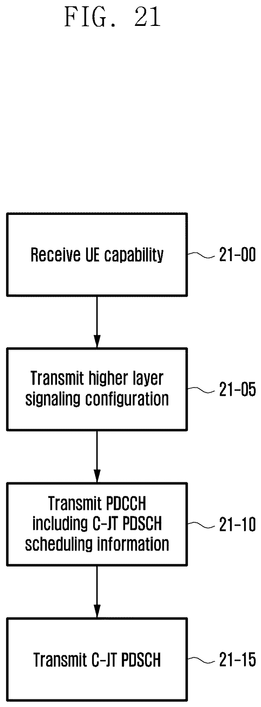

FIG. 21 illustrates an operation of a base station for the C-JT PDSCH scheduling according to an embodiment of the disclosure.

The base station may receive a UE capability report from a UE (operation 21-00). Here, the UE capability report transmitted by the UE may include a UE capability report for C-JT PDSCH support mentioned in the first embodiment.

The base station may transmit a higher layer signaling configuration to the UE according to the UE capability report (operation 21-05). Here, the higher layer signaling transmitted by the base station to the UE may include higher layer signaling for C-JT PDSCH support mentioned in the first embodiment.

The base station may transmit a PDCCH including C-JT PDSCH scheduling information to the UE (operation 21-10). Here, the base station may assume the number of TCI states to be applied during C-JT PDSCH transmission and a channel parameter to be applied to each TCI state, based on a combination of information indicated by the higher layer signaling transmitted by the base station to the UE, a TCI state field in DCI, and a TCI state selection field in the DCI.

The base station may transmit a C-JT PDSCH to the UE, based on C-JT PDSCH scheduling information included in the PDCCH (operation 21-15). Here, the base station may transmit the C-JT PDSCH to the UE under an assumption that the UE is to receive the C-JT PDSCH by applying, to all DMRSs of the C-JT PDSCH, the channel parameters included in one or more TCI states indicated through the TCI state field included in the PDCCH or one or more TCI states selected from among the indicated multiple TCI states through a new field used for selecting a TCI state to be applied to the PDSCH reception scheduled by the PDCCH.

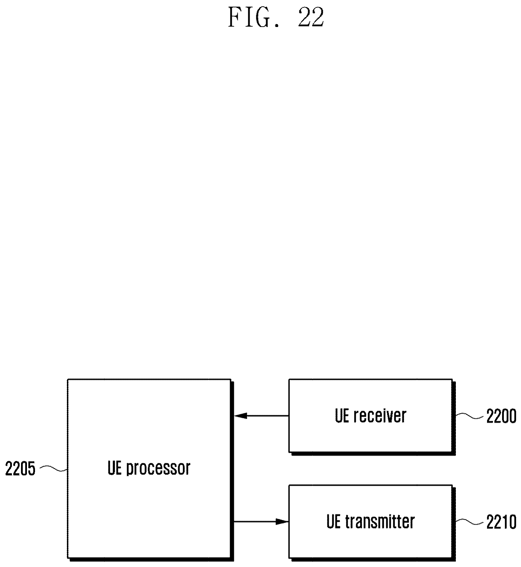

FIG. 22 illustrates a structure of a UE in a wireless communication system according to an embodiment of the disclosure.

Referring to FIG. 22, the UE may include a transceiver, which refers to a UE receiver 2200 and a UE transmitter 2210 as a whole, a memory (not illustrated), and a UE processor 2205 (or UE controller or processor). The UE transceiver 2200 and 2210, the memory, and the UE processor 2205 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

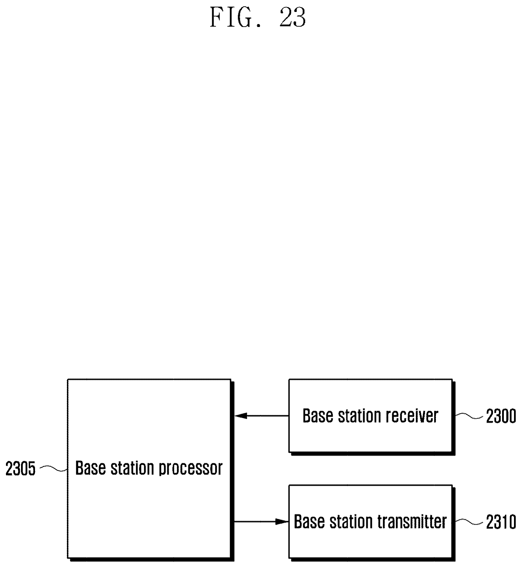

FIG. 23 illustrates a structure of a base station in a wireless communication system according to an embodiment of the disclosure.

Referring to FIG. 23, the base station may include a transceiver, which refers to a base station receiver 2300 and a base station transmitter 2310 as a whole, a memory (not illustrated), and a base station processor 2305 (or base station controller or processor). The base station transceiver 2300 and 2310, the memory, and the base station processor 2305 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method by a terminal in a communication system, the method comprising:
transmitting, to a base station, terminal capability information indicating whether two TCI states are supported for a coherent joint transmission (CJT) transmission scheme for a physical downlink shared channel (PDSCH);
receiving, from the base station, configuration information for configuring the CJT transmission scheme as a first scheme or a second scheme according to the terminal capability information;
receiving, from the base station, a physical downlink control channel (PDCCH) indicating a first TCI state and a second TCI state for reception of the PDSCH; and
receiving the PDSCH from the base station, based on the CJT transmission scheme configured by the configuration information,
wherein a demodulation reference signal (DMRS) associated with the PDSCH is quasi co-located (QCLed) with an RS of the first TCI state and an RS of the second TCI state according to the CJT transmission scheme configured by the configuration information.

2. The method of claim 1, wherein the terminal capability information comprises one of a first terminal capability indicating that the first scheme is supported, a second terminal capability indicating that the second scheme is supported, and a third terminal capability indicating that both the first scheme and the second scheme are supported.

3. The method of claim 1, wherein the first scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to QCL parameters including average delay, delay spread, Doppler shift, and Doppler spread, based on QCL-Type A.

4. The method of claim 1, wherein the second scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to average delay and delay spread, except Doppler shift and Doppler spread, among QCL parameters associated with QCL-Type A.

5. A method by a base station in a communication system, the method comprising:
receiving, from a terminal, terminal capability information indicating whether two TCI states are supported for a coherent joint transmission (CJT) transmission scheme for a physical downlink shared channel (PDSCH);
transmitting, to the terminal, configuration information for configuring the CJT transmission scheme as a first scheme or a second scheme according to the terminal capability information;
transmitting, to the terminal, a physical downlink control channel (PDCCH) indicating a first TCI state and a second TCI state for transmission of the PDSCH; and
transmitting the PDSCH to the terminal, based on the CJT transmission scheme configured by the configuration information,
wherein a demodulation reference signal (DMRS) associated with the PDSCH is quasi co-located (QCLed) with an RS of the first TCI state and an RS of the second TCI state according to the CJT transmission scheme configured by the configuration information.

6. The method of claim 5, wherein the terminal capability comprises one of a first terminal capability indicating that the first scheme is supported, a second terminal capability indicating that the second scheme is supported, and a third terminal capability indicating that both the first scheme and the second scheme are supported.

7. The method of claim 5, wherein the first scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to QCL parameters including average delay, delay spread, Doppler shift, and Doppler spread, based on QCL-Type A.

8. The method of claim 5, wherein the second scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to average delay and delay spread, except Doppler shift and Doppler spread, among QCL parameters associated with QCL-Type A.

9. A terminal in a communication system, the terminal comprising:
a transceiver; and
a controller configured to,
transmit, to a base station, terminal capability information indicating whether two TCI states are supported for a coherent joint transmission (CJT) transmission scheme for a physical downlink shared channel (PDSCH),
receive, from the base station, configuration information for configuring the CJT transmission scheme as a first scheme or a second scheme according to the terminal capability information,
receive, from the base station, a physical downlink control channel (PDCCH) indicating a first TCI state and a second TCI state for reception of the PDSCH, and
receive the PDSCH from the base station, based on the CJT transmission scheme configured by the configuration information,
wherein a demodulation reference signal (DMRS) associated with the PDSCH is quasi co-located (QCLed) with an RS of the first TCI state and an RS of the second TCI state according to the CJT transmission scheme configured by the configuration information.

10. The terminal of claim 9, wherein the terminal capability information comprises one of a first terminal capability indicating that the first scheme is supported, a second terminal capability indicating that the second scheme is supported, and a third terminal capability indicating that both the first scheme and the second scheme are supported.

11. The terminal of claim 9, wherein the first scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to QCL parameters including average delay, delay spread, Doppler shift, and Doppler spread, based on QCL-Type A.

12. The terminal of claim 9, wherein the second scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to average delay and delay spread, except Doppler shift and Doppler spread, among QCL parameters associated with QCL-Type A.

13. A base station in a communication system, the base station comprising:
a transceiver; and
a controller configured to,
receive, from a terminal, terminal capability information indicating whether two TCI states are supported for a coherent joint transmission (CJT) transmission scheme for a physical downlink shared channel (PDSCH),
transmit, to the terminal, configuration information for configuring the CJT transmission scheme as a first scheme or a second scheme according to the terminal capability information,
transmit, to the terminal, a physical downlink control channel (PDCCH) indicating a first TCI state and a second TCI state for transmission of the PDSCH, and
transmit the PDSCH to the terminal, based on the CJT transmission scheme configured by the configuration information,
wherein a demodulation reference signal (DMRS) associated with the PDSCH is quasi co-located (QCLed) with an RS of the first TCI state and an RS of the second TCI state according to the CJT transmission scheme configured by the configuration information.

14. The base station of claim 13, wherein the terminal capability comprises one of a first terminal capability indicating that the first scheme is supported, a second terminal capability indicating that the second scheme is supported, and a third terminal capability indicating that both the first scheme and the second scheme are supported.

15. The base station of claim 13, wherein the first scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to QCL parameters including average delay, delay spread, Doppler shift, and Doppler spread, based on QCL-Type A, and
wherein the second scheme indicates that the DMRS associated with the PDSCH is QCLed with the RS of the first TCI state with respect to QCL parameters including average delay, delay spread, Doppler shift, and Doppler spread, based on QCL-Type A, and that the DMRS associated with the PDSCH is QCLed with the RS of the second TCI state with respect to average delay and delay spread, except Doppler shift and Doppler spread, among QCL parameters associated with QCL-Type A.
